# EUROPÄISCHE PATENTANMELDUNG

(11) **EP 2 255 930 A1**
(43) Veröffentlichungstag der Anmeldung: **01.12.2010**
(21) Anmeldenummer: 09161295.2
(22) Anmeldetag: 27.05.2009
(51) Int. Cl.: B25J 9/16, G05B 19/402

(54) **Verfahren und System zum hochpräzisen Positionieren mindestens eines Objekts in eine Endlage im Raum**

(71) Anmelder: Leica Geosystems AG, 9435 Heerbrugg (CH)
(72) Erfinder: Walser, Bernd, CH-9435, Heerbrugg (CH); Metzler, Bernhard, A-6850 Dornbirn (AT); Aebischer, Beat, CH-9435, Heerbrugg (CH); Siercks, Knut, CH-9402, Mörschwil (CH); Pettersson, Bo, London, SW14 7DG (GB)
(74) Vertreter: Harmann, Bernd-Günther

(57) **Zusammenfassung**

Die Erfindung betrifft ein Verfahren und ein System zum hochpräzisen Positionieren mindestens eines Objekts in eine Endlage im Raum. Ein Objekt (12) wird von dem Industrieroboter (11) innerhalb einer Greiftoleranz gegriffen und gehalten. Eine die Greiftoleranz korrigierende Abgleichgrösse wird für den Industrieroboter (11) bestimmt. Das Objekt (12) wird hochpräzise in eine Endlage verstellt durch die sich bis zum Erreichen der Endlage in einer vorgegebenen Toleranz wiederholenden Schritte: Aufnehmen eines dreidimensionalen Bilds mittels einer 3D-Bildaufnahmeeinrichtung (1). Bestimmen der aktuellen Lage des Objekts (12) im Raum-Koordinatensystem aus der Position (P) der 3D-Bildaufnahmeeinrichtung (1), der durch eine Winkelmesseinheit (4) erfassten Winkelausrichtung der 3D-Bildaufnahmeeinrichtung (1), dem dreidimensionalen Bild und der Kenntnis von Merkmalen (13) auf dem Objekt (12). Berechnen der Lagedifferenz zwischen der aktuellen Lage des Objekts (12) und der Endlage. Berechnen einer neuen Sollstellung des Industrieroboters (11) unter Berücksichtigung der Abgleichgrösse aus der aktuellen Stellung des Industrieroboters (11) und einer mit der Lagedifferenz verknüpften Grösse. Verstellen des Industrieroboters (11) in die neue Sollstellung.

## Beschreibung

Die Erfindung betrifft ein Verfahren zum hochpräzisen Positionieren mindestens eines Objekts, das bekannte optisch erfassbare Merkmale aufweist, in eine Endlage im Raum mittels eines Industrieroboters und einer optischen 3D-Bildaufnahmeeinrichtung sowie entsprechende Systeme zur Durchführung dieses Verfahrens. Solche Verfahren und Systeme finden insbesondere Anwendung bei Montage- und Fertigungsvorgängen in automatisierten Fertigungsstrassen, beispielsweise in der Automobilindustrie, bei denen ein Objekt, beispielsweise ein Blech- oder sonstiges Karosserieteil, mittels eines Industrieroboters hochpräzise in eine bestimmte Position und Ausrichtung im Raum zur Durchführung eines Arbeitsschritts gebracht werden soll.

Die aus dem Stand der Technik bekannten Handhabungssysteme, insbesondere Industrieroboter, z.B. Gelenkarmroboter, zum Positionieren eines mittels einer Greifvorrichtung gegriffenen Objekts in einer bestimmten Position und Ausrichtung im Raum, weisen interne Messsysteme auf, welche die Stellung der Glieder des Handhabungssystems erfassen können und somit Aufschluss über die Position und Ausrichtung der Greifvorrichtung im Raum geben. Zu unterscheiden ist hierbei zwischen achsbezogenen und raumbezogenen Koordinatensystemen. Die achsbezogenen Koordinatensysteme beziehen sich jeweils auf eine Achse des Roboters und deren jeweilige Stellung. Aus der kinematischen Kette der einzelnen Achsen und Glieder des Roboters und deren jeweiligen Stellungen ergibt sich die eindeutige Lage (Position und Ausrichtung) des Roboterwerkzeugs, also der Greifvorrichtung, am Ende der kinematischen Kette. Die Lage der Greifvorrichtung eines Industrieroboters wird jedoch vorzugsweise raumbezogen über den so genannten TCP, den Tool Center Point, beschrieben. Dies ist ein gedachter Referenzpunkt, der sich an geeigneter Stelle am Roboterwerkzeug befindet. Um zu beschreiben, welche Lage das Roboterwerkzeug einnehmen soll, werden die Position des TCP im Raum und seine Verdrehung definiert. Insbesondere mittels der so genannten Denavit-Hartenberg-Transformation wird mittels der Robotersteuerung errechnet, welche Stellung die einzelnen Roboterachsen einnehmen müssen, so dass das Roboterwerkzeug die vorgegebene Lage einnimmt. Die Lage der Greifvorrichtung mit deren TCP bezieht sich vorzugsweise auf das Weltkoordinatensystem, das Raum-Koordinatensystem oder das Zellen-Koordinatensystem, das beispielsweise auf die Basis der ersten Achse, der Grundachse, dem Grundgestell oder die Roboterbasis des Roboters direkt oder indirekt bezogen ist und hierzu gekoppelt ist. Auf dieses Welt-Koordinatensystem, Raum-Koordinatensystem oder Zellen-Koordinatensystem sind die restlichen Unter-Koordinatensysteme bezogen. Selbstverständlich muss es sich bei diesem Welt-Koordinatensystem, Raum-Koordinatensystem oder Zellen-Koordinatensystem nicht um ein absolutes Weltsystem handeln, sondern auch dieses System kann einem anderen System untergeordnet sein. Es handelt sich also hierbei um ein Koordinatensystem, das innerhalb des Prozesses das übergeordnete Bezugssystem bildet. Meist ist dieses System mit dem Boden der Prozesshalle, des Prozessraumes oder der Prozesszelle gekoppelt.

Somit ist es möglich, die Greifvorrichtung einschliesslich des gegriffenen Objekts in eine bestimmte vorgegebene Stellung durch entsprechende Eingabe an die Robotersteuerung zu verstellen. Das gegriffene Objekt wird also durch Vorgabe einer Stellung der Greifvorrichtung im Raum positioniert. Hierbei ergeben sich jedoch insbesondere die folgenden beiden Probleme.

Zum einen ist das Messsystem herkömmlicher Industrieroboter, die zum Halten schwerer Objekte ausgelegt sind, nicht derart präzise, dass die Greifvorrichtung eine derart genaue Lage, wie sie bei manchen Fertigungsverfahren gefordert ist, im Raum einnehmen kann. Zwar sind die Antriebe von Industrierobotern hinreichend präzise, jedoch nicht dessen Messsysteme. Durch die kinematische Kette multiplizieren sich die Messfehler der einzelnen Messglieder. Dies ergibt sich sowohl aus der Messungenauigkeit der einzelnen Messglieder, insbesondere der Winkelmesser eines Gelenkarmroboters, als auch aus der unvermeidbaren Elastizität der Roboterglieder.

Zum anderen ergibt sich aus der Stellung der Greifvorrichtung und somit deren Lage im Raum noch nicht zwangsläufig die Lage des Objekts im Raum, da das Objekt meist nur innerhalb einer Greiftoleranz gegriffen werden kann. Diese Greiftoleranz liegt oft weit über der geforderten Positionierungsgenauigkeit. Somit muss der Greiffehler, also die relative Lage des Objekts zur Greifvorrichtung, ebenfalls berücksichtigt werden. Hierzu kommen gesonderte, nicht mehr zum Roboter gehörende Messsysteme, insbesondere berührungslose optische Messsysteme zum Einsatz. Erst diese ermöglichen es, das Objekt im Raum mit der geforderten Genauigkeit in einer bestimmten Lage zu positionieren.

Aus der WO 2007/004983 A1 (Pettersson) ist ein Verfahren zum fügenden Schweissen von Werkstücken, insbesondere gepressten Blechteilen oder Verbundblechen, bekannt. Die zusammenzufügenden Werkstücke werden von Industrierobotern gehalten und von diesen relativ zueinander zur gegenseitigen Schweissverbindung positioniert. Während des Herstellens der Schweissverbindung werden die Werkstücke von den Industrierobotern in den jeweiligen Lagen gehalten, so dass die relative Lage der Teile zueinender erhalten bleibt. Das Schweissen erfolgt beispielsweise mittels eines Schweissroboters. Ein Messsystem misst die Positionen der Werkstücke, um ein Positionieren der Werkstücke vor dem Schweissvorgang zu ermöglichen. Die Messung erfolgt insbesondere kontinuierlich während des Schweissvorgangs. Das beschriebene Verfahren ermöglicht es, auf die ansonsten üblichen werkstückspezifischen und aufwendig herzustellenden Formen und Werkstückaufnahmen, in welche die Werkstücke vor dem Schweissen fixiert werden müssen, zu verzichten. Die Industrieroboter können für unterschiedlich geformte und ausgestaltete Werkstücke universell eingesetzt werden, da durch das Erfassen der Position der Werkstücke mittels des Messsystems ein Identifizieren und Kontrollieren der Werkstücke sowie ein genaues relatives Positionieren der Teile zueinander möglich ist. Somit kann ein einziges System für unterschiedliche Werkstücke verwendet werden. Der Wechsel von Werkstückaufnahmen erübrigt sich somit. Das beschriebene Verfahren eignet sich gemäss der Offenbarung insbesondere zum Schweissen von Blechteilen, vor allem in der Automobilindustrie. Als mögliches Messsystem wird allgemein ein Lasertriangulationsverfahren, in welchem zuvor definierte Punkte auf dem Werkstück vermessen werden, genannt. Hierzu sind beispielsweise Reflektoren auf dem Werkstück angebracht. Die Position jedes Reflektors kann gemäss der Beschreibung mittels einer Lichtquelle und einem zweidimensionalen Detektor ermittelt werden, so dass die Position und Ausrichtung des Werkstücks mittels dreier solcher Punkte erfasst werden kann. Der genaue Aufbau des Messsystems ist in der WO 2007/004983 A1 nicht näher beschrieben.

Die US 5,380,978 (Pryor) beschreibt ein Verfahren zum Positionieren von Objekten, insbesondere Blechteilen, im Raum mittels eines Industrieroboters. Als Messsystem werden unter anderem Kameras eingesetzt, die zur dreidimensionalen Erfassung der Lage des Objekts im Raum eine entsprechende Stereobasis aufweisen. Die Kameras sind zur Verstellung des Sichtfeldes schwenkbar und in einer speziellen Ausführungsform als Theodolitkamera, die auch über einen Laserdistanzmesser verfügen kann, ausgebildet. Der beschriebene Theodolit dient hierbei als präzise Verstellvorrichtung für die Kamera. Ähnliche Messsysteme werden auch in der US 4,851,905 (Pryor) und US 5,706,408 (Pryor) beschrieben.

Gemein ist diesen Systeme und Verfahren, dass die Positionen mehrerer ausgezeichneter Punkte auf dem Objekt mittels berührungsloser photogrammetrischer Koordinatenmessungen unter Zuhilfenahme bildverarbeitender Systeme ermittelt werden.

Zur berührungslosen photogrammetrischen Koordinatenmessung an der Oberfläche eines Objekts im Nahbereich wird aus Bildern, die das Objekt aus verschiedenen Perspektiven wiedergeben, durch Transformierung der Bilddaten in ein Objektkoordinatensystem, innerhalb welchem das Objekt zu vermessen ist und welchem beispielsweise das CAD-Modell des Objekts zugrunde liegt, auf die Abmessungen des Objekts und dessen Lage relativ zu weiteren Objekten im Bild geschlossen. Hierzu werden die Bilddaten in einer Datenverarbeitungseinheit verarbeitet. Die Grundlage der Koordinatenberechnung ist die Bestimmung der relativen Kameraorientierungen der beteiligten Bilder.

Es besteht hierbei, wie aus dem Stand der Technik bekannt, die Möglichkeit, zeitlich versetzt aus verschiedenen Perspektiven den zu vermessenden Flächenabschnitt der Objektoberfläche mittels einer einzigen Kamera aufzunehmen und im Anschluss die jeweils zweidimensionalen Bilddaten mittels eines Bildverarbeitungssystems zu einem so genannten dreidimensionalen Bild zu verarbeiten. Den Bildpunkten dieses dreidimensionalen Bildes werden hierbei jeweils Tiefeninformationen zugeordnet, so dass jedem zu untersuchenden Bildpunkt, insbesondere allen Bildpunkten, 3D-Bildkoordinaten in einem Bildkoordinatensystem, das sich aus den Kameras und deren Perspektiven bestimmt, zugeordnet sind. Unterschiedliche Bildverarbeitungsverfahren zur Erzeugung eines derartigen dreidimensionalen Bildes aus mehreren, die gleiche Szene aus unterschiedlichen Perspektiven zeigenden zweidimensionalen Bildern sind aus dem Stand der Technik bekannt.

Weiters besteht die Möglichkeit, wie ebenfalls aus dem Stand der Technik bekannt, anstelle der zeitlich versetzten Aufnahme des Flächenabschnitts aus unterschiedlichen Perspektiven mittels einer Kamera eine im Wesentlichen zeitgleiche Aufnahme unter Zuhilfenahme von mehreren Kameras durchzuführen. Dies hat sowohl den Vorteil, dass ohne Kamerabewegung ein dreidimensionales Erfassen des Flächenabschnitts möglich ist, als auch entfällt ein Erfassen der jeweiligen Kameraausrichtungen, da die Kameras zueinander eine feste relative Ausrichtung und Entfernung besitzen können.

Aus dem Stand der Technik sind unterschiedliche 3D-Bildaufnahmeeinrichtungen bekannt, die sich im Wesentlichen aus zwei oder drei Kameras zusammensetzen, die zueinander beabstandet, also einen Stereobasis aufweisend, in einem gemeinsamen Gehäuse fest miteinander gekoppelt zum Aufnehmen einer Szene aus jeweils unterschiedlichen, jedoch fixen relativen Perspektive untergebracht sind. Da der aufgenommene Flächenabschnitt nicht zwangsläufig charakteristische Bildmerkmale aufweist, die ein elektronisches Verarbeiten der Bilder ermöglichen, können Markierungen auf dem Flächenabschnitt aufgebracht werden. Diese Markierungen können mittels eines von der 3D-Bildaufnahmeeinheit auf den Flächenabschnitt projizieren strukturierten Lichtstrahls, insbesondere Laserstrahls, der beispielsweise ein optisches Raster oder ein optisches Markierungskreuz projiziert, erzeugt werden. Regelmässig beinhalten derartige 3D-Bildaufnahmeeinheiten auch eine Bildverarbeitungseinrichtung, die aus den mehreren im Wesentlichen gleichzeitig aufgenommenen Bildern unterschiedlicher Perspektiven ein dreidimensionales Bild ableitet.

Derartige 3D-Bildaufnahmeeinheiten sind beispielsweise die unter dem Markennamen "Optigo" und "OptiCell" bekannten Bildaufnahmesysteme der Firma "CogniTens", die drei in einem gleichschenkligen Dreieck angeordnete Kameras enthalten, sowie das System "Advent" der Firma "ActiCM" mit zwei nebeneinander angeordneten hochauflösenden CCD-Kameras sowie einem Projektor zur Projektion von strukturiertem Licht auf den aufzunehmenden Abschnitt.

Die Bestimmung der Koordinaten von zu vermessenden, aufgenommen Bildelementen erfolgt in der Regel mittels referenzierter Markierungen innerhalb des Bildes, von welchen Markierungen aus die eigentliche 3D-Koordinatenmessung stattfindet. Hierbei wird das Bildkoordinatensystem, welches sich auf das aufgenommene dreidimensionale Bild bezieht und somit auf die 3D-Bildaufnahmeeinheit bezogen ist, in das Objektkoordinatensystem, innerhalb welchem das Objekt zu vermessen ist und welchem beispielsweise das CAD-Modell des Objekts zugrunde liegt, transformiert. Die Transformation findet auf Basis von aufgenommenen Referenz-Markierungen statt, deren Positionen im Objektkoordinatensystem bekannt sind. Mit den aus dem Stand der Technik bekannten 3D-Bildaufnahmeeinheiten werden hierbei Genauigkeiten von unter 0,5 Millimeter erreicht.

Weiters sind 3D-Scansysteme insbesondere in Form von 3D-Scannern mit elektrooptischer Distanzmessung bekannt, welche innerhalb eines Flächenbereichs eine Tiefenabtastung durchführen und eine Punktwolke erzeugen. Hierbei ist zwischen seriellen Systemen, bei welchen ein punktartiger Messstrahl eine Fläche punktweise abtastet, parallelen Systeme, bei welchen ein linienartiger Messstrahl eine Fläche linienweise abtastet, und vollparallelen Systemen, die eine Vielzahl an Punkten innerhalb eines Flächenbereich zeitgleich abtasten und somit ein Tiefenaufnahme des Flächenbereichs durchführen, zu unterscheiden. Allen diesen Systemen ist in der Regel gemein, dass die Tiefenabtastung mittels mindestens eines auf die Fläche gerichteten und/oder über die Fläche bewegten Distanzmessstrahls erfolgt. Vor allem serielle Systeme sind weit verbreitet und beispielsweise unter den Produktbezeichnungen "Leica HDS 6000", "Leica ScanStation 2", "Trimble GX 3D Scanner", "Zoller + Fröhlich IMAGER 5003" und "2oller + Fröhlich IMAGER 5006" kommerziell verfügbar. Als weitere Systeme sind beispielsweise "3rdTech DeltaSphere-3000IR", "Basis Software Surphaser 25HSX", "Basis Software Surphaser 25HS", "Callidus precision systems CPW 8000", "Callidus precision systems CP 3200", "Faro Europe LS 420", "Faro Europe LS 880", "I-Site 4400-LR", "I-Site 4400-CR", "Optech ILRIS-3DER", "Optech ILRIS-3D", "Riegl Laser Measurement Systems LMS-Z420i / LMS-Z390i", "Riegl Laser Measurement Systems LPM-321" und "Trimble VX" zu nennen.

Ausserdem existieren RIM-Kameras, auch RIMs oder Range Imaging Systeme genannt, mittels welcher eine Bildaufnahme eines Objekts bei gleichzeitigem Erfassen einer Tiefeninformation für jeden Bildpunkt oder für eine Gruppe von Bildpunkten möglich ist. Somit ist es möglich, mittels einer einzigen Vorrichtung ein dreidimensionales Bild, bei welchem jedem Bildpunkt oder einer Vielzahl an Bildpunktgruppen eine Tiefinformation, also eine Abstandsinformation zur Kamera, zugeordnet ist, aufzunehmen.

Ein Problem jeder 3D-Bildaufnahmeeinheit bildet der bauartbedingt begrenzte Aufnahmebereich, innerhalb welchen eine Bildaufnahme mit der geforderten Auflösung erfolgen kann. Bei der dreidimensionalen Erfassung grösserer Objekte ist es daher unvermeidbar, mehrere einzelne dreidimensionale Aufnahmen aus unterschiedlichen Positionen und Ausrichtungen der 3D-Bildaufnahmeeinheit zu machen. Diese Vielzahl kleinerer Bildaufnahmen wird im Anschluss mittels Abgleich überlappender Bildbereiche und unter Zuhilfenahme von Markierungen innerhalb des aufgenommenen Flächenabschnitts zu einem grösseren dreidimensionalen Gesamtbild zusammengefügt. Unterschiedliche Verfahren zur Lösung dieser Aufgabe sind aus dem Stand der Technik bekannt. Ein allgemeines Problem bei diesen Verfahren besteht darin, dass die einzelnen dreidimensionalen Bilder, welche zu einem grösseren Bild zusammengefügt werden sollen, einen Überlappungsbereich aufweisen müssen. Das diskrete Verändern der Position der 3D-Bildaufnahmeeinheit von einem mindestens einen Referenzpunkt aufweisenden ersten Flächenabschnitt zu einem zweiten Flächenabschnitt, der vom ersten Flächenabschnitt distanziert ist und keinen Referenzpunkt enthält, ist mittels der bildverarbeitenden Systeme nicht möglich, falls keine weiteren Bilder aufgenommen wurden, welche die beiden Flächenabschnitte verbinden. Es ist daher erforderlich, eine Vielzahl an Zwischenbildaufnahmen durchzuführen, um die beiden zu vermessenden, distanzierten Flächenabschnitte optisch zu verbinden und die zusammenhängende Bildverarbeitung zu ermöglichen. Durch die Aufnahme einer Vielzahl an dreidimensionalen Bildern, die keinen unmittelbaren Messinhalt aufweisen, wird das gesamte Messverfahren verlangsamt und Speicher- und Rechenressourcen beansprucht. Weiters wirken sich die zwangsläufig mit geringen Messfehlern behafteten Koordinatenmessungen innerhalb der Bildaufnahme beim Zusammensetzen der Vielzahl von Bildern drastisch auf die Messgenauigkeit aus, insbesondere im Falle entfernter Referenzpunkte.

Die Verwendung einer Vielzahl an Referenzpunkten, die bekannte Positionen im Objektkoordinatensystem haben, ist aufgrund des begrenzten Sichtfeldes der Kameras somit unvermeidbar. Ein Vorteil der beschriebenen rein photogrammetrischen Systeme besteht darin, dass die absolute Position und Ausrichtung der einzelnen Kameras der 3D-Bildaufnahmeeinheit im Objektkoordinatensystem nicht ermittelt werden muss, denn die absolute Positionsbestimmung der aufgenommenen Bildpunkte erfolgt aus der Kenntnis der Position der ebenfalls aufgenommenen Referenzpunkte im Bild, der relativen Ausrichtung der Kameras zueinander sowie der über Triangulation berechneten Relativpositionen der zu vermessenden Punkte relativ zu den Referenzpunkten im Bild. Das Vermessungssystem kann sich somit auf bildkalibrierte Kameras, deren Relativlage zueinander bekannt ist, und eine Bildverarbeitungseinrichtung begrenzen.

Ein Nachteil all dieser Systeme besteht darin, dass aufgrund des begrenzten Sichtfelds der Kameras und der begrenzten Bildauflösung ein Verstellen des Sichtfelds entweder durch Schwenken oder Positionsverändern der Kameras bzw. des zu vermessenden Objekts oft nicht vermeidbar ist. Dies ist vor allem beim Vermessen grösserer, hochpräzise zu vermessender Objekte der Fall, da ein bestimmter Abstand der Kameras zum Objekt aufgrund der begrenzten Bildauflösung zur Einhaltung der geforderten Messgenauigkeit nicht überschritten werden darf, jedoch das Sichtfeld der Kamera bei einer derartigen Objektnähe nur die Aufnahme eines Teils des Objekts zulässt. Somit ist es entweder erforderlich, eine Vielzahl an Referenzpunkten zu verwenden, so dass bei jeder Bildaufnahme eine entsprechende Anzahl an Referenzpunkten, bevorzugt mindestens drei Referenzpunkte, im Sichtfeld liegt, oder auf die Positionen bereits zuvor bestimmter Objektpunkte, insbesondere Markierungen auf dem Objekt, zurückzugreifen.

In diesem Fall werden, wie oben beschrieben, mehrere einzelne dreidimensionale Aufnahmen aus unterschiedlichen Positionen und Ausrichtungen der 3D-Bildaufnahmeeinheit gemacht. Diese Vielzahl der kleinerer Bildaufnahmen wird im Anschluss mittels Abgleich überlappender Bildbereiche und unter Zuhilfenahme von Markierungen innerhalb des aufgenommenen Flächenabschnitts zu einem grösseren dreidimensionalen Gesamtbild zusammengefügt. Dies kostet Zeit und erfordert die Verwendung an sich nicht zu vermessender Markierungen.

Weiters sind Messsysteme und Verfahren aus dem Stand der Technik bekannt, bei welchen die 3D-Bildaufnahmeeinheit von dem Kopf eines Industrieroboters oder einer Portal-Koordinatenmessmaschine getragen wird und verstellbar ist. Aufgrund des hohen Gewichts einer hochwertigen und hochauflösenden 3D-Bildaufnahmeeinheit, das zum Teil über 10 Kilogramm beträgt, ist eine präzise Erfassung der Position des 3D-Bildaufnahmeeinheit mit der erforderlichen Genauigkeit, die der Bildaufnahmegenauigkeit gleichkommt, nicht möglich, da dies einen derart stabilen Aufbau des Handhabungssystems erfordern würde, dass der Einsatzbereich der 3D-Bildaufnahmeeinheit auf stationäre Systeme begrenzt wäre. Industrieroboter sind aufgrund ihrer verhältnismässig geringen Messgenauigkeit, die erheblich geringer ist als die einer präzisen 3D-Bildaufnahmeeinheit, zur externen Referenzierung ungeeignet. Wiederum sind Portal-Koordinatenmessmaschinen nicht zum Tragen schwerer Lasten ausgelegt und liefern bei starker mechanischer Belastung keine zur Referenzierung brauchbaren Messergebnisse. Aus diesem Grunde können die vom Handhabungssystem allfällig gelieferten Positionsmesswerte, welche Aufschluss über die absolute und/oder relative Position der 3D-Bildaufnahmeeinheit geben könnten, zur Referenzierung der Bildaufnahmen, insbesondere mehrere dreidimensionaler Bildaufnahmen unterschiedlicher, nicht zusammenhängender Flächenabschnitt, nicht herangezogen werden.

Zwar eignen sich die beschriebenen Messsysteme auch für das hochpräzise Positionieren von Objekten im Raum mittels Handhabungssystemen und werden hierzu auch eingesetzt, jedoch sind die bisher aus dem Stand der Technik bekannten Systeme mit zahlreichen Nachteilen behaftet. Aufgrund der oben beschriebenen, im Wesentlichen rein über Bildverarbeitung erfolgenden Messmethode benötigen die Verfahren relativ viel Zeit und erfordern das Erfassen an sich nicht zu vermessender Referenz- oder Hilfsmarkierungen. Aufgrund des begrenzten Sichtfeldes der Kameras sind die 3D-Bildaufnahmeeinheiten meist in unmittelbarer Prozessnähe angeordnet, in der Regel auf einem Roboterarm oder in geringem Abstand zum Objekt. Wegen der damit verbundenen Prozessnähe ist die 3D-Bildaufnahmeeinheit allfälligen Partikeln und thermischen Einflüssen, die durch den Prozess - beispielsweise beim Schweissen - entstehen, ausgesetzt. Ebenfalls aufgrund der Prozessnähe müssen weitere Handhabungssysteme auf das Handhabungssystem der 3D-Bildaufnahmeeinheit abgestimmt sein, um Kollisionen zu vermeiden. Ein Bewegen der 3D-Bildaufnahmeeinheit und die damit verbundenen Neureferenzierung erfordert verhältnismässig viel Zeit und verlangsamt den gesamten Prozessablauf. Somit wird bisher auf eine prozessferne Anordnung der 3D-Bildaufnahmeeinheit gänzlich verzichtet.

Die beiden Ziele, einerseits ein hochpräzises, berührungsloses 3D-Messsystem mit einer Genauigkeit von vorzugsweise unter 0,1 Millimeter zum hochpräzisen Positionieren von Objekten mittels Industrierobotern einzusetzen, andererseits ein nicht unmittelbar dem Prozess ausgesetztes Messsystem, das flexibel zu handhaben ist und insbesondere frei positioniert werden kann, stellen somit einen bisher nicht hinreichend gelösten Zielkonflikt im Bereich der industriellen Objektpositionierung mittels Industrierobotern dar.

Aufgabe der Erfindung ist es daher, ein sich durch Flexibilität, Präzision und hohe Prozessgeschwindigkeit auszeichnendes Verfahren und ein entsprechendes System zum hochpräzisen Positionieren mindestens eines Objekts in eine Lage im Raum mittels eines Industrieroboters zur Verfügung zu stellen.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Verfahren wird zunächst allgemein beschrieben. Mögliche und bevorzugte Weiterbildungen der Erfindung werden im Anschluss allgemein unter Zuhilfenahme der Figuren, die schematisch dargestellte Ausführungsbeispiele zeigen, erläutert.

Das Verfahren zum hochpräzisen Positionieren mindestens eines Objekts in eine Endlage im Raum wird mittels eines Industrieroboters und einer optischen 3D-Bildaufnahmeeinrichtung durchgeführt. Der erste Industrieroboter ist in vorgebbare Stellungen verstellbar. Er ist innenkalibriert sowie in dem dreidimensionalen Raum-Koordinatensystem kalibriert und zu diesem in Bezug gebracht. Die optische 3D-Bildaufnahmeeinrichtung, die in einem dreidimensionalen Raum-Koordinatensystem kalibriert und in einer bekannten Position mit einer bekannten Ausrichtung positioniert ist, ist zur elektronischen Aufnahme dreidimensionaler Bilder innerhalb eines bestimmten Sichtfelds ausgebildet, wobei sich die dreidimensionalen Bilder jeweils aus einer Vielzahl an Bildpunkten, denen jeweils eine Tiefeninformation zugeordnet ist, zusammensetzen. Die optische 3D-Bildaufnahmeeinrichtung besitzt eine Antriebseinheit zum ein Verstellen des Sichtfelds bewirkenden Ausrichten der 3D-Bildaufnahmeeinrichtung. Ausserdem besitzt die optische 3D-Bildaufnahmeeinrichtung eine im Raum-Koordinatensystem kalibrierte Winkelmesseinheit zum hochpräzisen Erfassen der Winkelausrichtung der 3D-Bildaufnahmeeinrichtung, so dass das Sichtfeld im Raum-Koordinatensystem bestimmbar ist.

Das Verfahren umfasst folgende Schritte:
Ein erstes Objekt, das bekannte optisch erfassbare erste Merkmale aufweist, wird von dem ersten Industrieroboter innerhalb einer Greiftoleranz gegriffen und gehalten.

Eine derartige, die Greiftoleranz korrigierende erste Abgleichgrösse wird für den ersten Industrieroboter bestimmt, so dass das erste Objekt im Raum-Koordinatensystem durch Vorgabe einer Stellung des ersten Industrieroboters abgeglichen verstellbar ist. Dieses Bestimmen der ersten Abgleichgrösse erfolgt durch folgende Schritte: Ausrichten des Sichtfelds der 3D-Bildaufnahmeeinrichtung mittels der Antriebseinheit auf zumindest einen Teil der ersten Merkmale des ersten Objekts, das in einer ersten Abgleichstellung des ersten Industrieroboters gehaltenen wird. Aufnehmen mindestens eines ersten dreidimensionalen Bilds. Bestimmen der Lage des ersten Objekts im Raum-Koordinatensystem in der ersten Abgleichstellung des ersten Industrieroboters aus der Position der 3D-Bildaufnahmeeinrichtung, der durch die Winkelmesseinheit erfassten Winkelausrichtung der 3D-Bildaufnahmeeinrichtung, dem ersten dreidimensionalen Bild und der Kenntnis der ersten Merkmale auf dem ersten Objekt. Bestimmen der ersten Abgleichgrösse durch Heranziehen der ersten Abgleichstellung des ersten Industrieroboters und zumindest der bestimmten Lage des ersten Objekts in der ersten Abgleichstellung des ersten Industrieroboters.

Das erste Objekt wird hochpräzise in eine erste Endlage verstellt durch die folgenden, sich wiederholenden Schritte, bis die erste Endlage in einer vorgegebenen Toleranz erreicht ist: Aufnehmen mindestens eines weiteren ersten dreidimensionalen Bilds mit der 3D-Bildaufnahmeeinrichtung. Bestimmen der aktuellen Lage des ersten Objekts im Raum-Koordinatensystem aus der Position der 3D-Bildaufnahmeeinrichtung, der durch die Winkelmesseinheit erfassten Winkelausrichtung der 3D-Bildaufnahmeeinrichtung, dem weiteren ersten dreidimensionalen Bild und der Kenntnis der ersten Merkmale auf dem ersten Objekt. Berechnen der Lagedifferenz zwischen der aktuellen Lage des ersten Objekts und der ersten Endlage. Berechnen einer neuen Sollstellung des ersten Industrieroboters unter Berücksichtigung der ersten Abgleichgrösse aus der aktuellen Stellung des ersten Industrieroboters und einer mit der Lagedifferenz verknüpften Grösse, und Verstellen des ersten Industrieroboters in die neue Sollstellung.

Das erfindungsgemässe System zum hochpräzisen Positionieren mindestens eines Objekts in eine Endlage im Raum mittels eines Industrieroboters umfasst einen ersten Industrieroboter, eine optische 3D-Bildaufnahmeeinrichtung und eine Steuervorrichtung. Der erste Industrieroboter ist derart kalibriert, dass er in vorgebbare Stellungen verstellbar ist. Hierzu ist der Industrieroboter innenkalibriert und zu dem Raum-Koordinatensystem in Bezug gebracht. Die optische 3D-Bildaufnahmeeinrichtung, die in einem dreidimensionalen Raum-Koordinatensystem kalibriert und in einer bekannten Position mit einer bekannten Ausrichtung positioniert ist, ist zur elektronischen Aufnahme dreidimensionaler Bilder innerhalb eines bestimmten Sichtfelds ausgebildet ist, wobei sich die dreidimensionalen Bilder jeweils aus einer Vielzahl an Bildpunkten, denen jeweils eine Tiefeninformation zugeordnet ist, zusammensetzen. Die optische 3D-Bildaufnahmeeinrichtung weist eine Antriebseinheit zum - ein Verstellen des Sichtfelds bewirkenden - Ausrichten der 3D-Bildaufnahmeeinrichtung auf und besitzt eine im Raum-Koordinatensystem kalibrierte Winkelmesseinheit zum hochpräzisen Erfassen der Winkelausrichtung der 3D-Bildaufnahmeeinrichtung, so dass das Sichtfeld im Raum-Koordinatensystem bestimmbar ist. Die Steuervorrichtung weist eine zur Bildverarbeitung ausgebildete Datenverarbeitungseinrichtung auf. Die Steuervorrichtung steht mit dem ersten Industrieroboter und der optischen 3D-Bildaufnahmeeinrichtung derart in Datenverbindung, das der Steuervorrichtung die von der optischen 3D-Bildaufnahmeeinrichtung aufgenommenen dreidimensionalen Bilder zugeführt werden, der Steuervorrichtung die von der Winkelmesseinheit erfasste Winkelausrichtung der 3D-Bildaufnahmeeinrichtung zugeführt wird, die Antriebseinheit mittels der Steuervorrichtung zum Ausrichten der 3D-Bildaufnahmeeinrichtung angesteuert wird und der erste Industrieroboter in Stellungen, die durch die Steuervorrichtung vorgegeben werden, verstellt wird. Die Steuervorrichtung und deren Datenverarbeitungseinrichtung sind derart ausgebildet und stehen derart mit den genannten Komponenten in der Datenverbindung, dass folgende Schritte durch Signalaufnahme, Signalauswertung, Signalberechnung und Signalausgabe ausgeführt werden:
Ein erstes Objekt, das der Steuervorrichtung bekannte optisch erfassbare erste Merkmale aufweist, wird von dem ersten Industrieroboter innerhalb einer Greiftoleranz gegriffen und gehalten.

Eine derartige, die Greiftoleranz korrigierende erste Abgleichgrösse wird für den ersten Industrieroboter durch die Steuervorrichtung bestimmt, so dass das erste Objekt im Raum-Koordinatensystem durch Vorgabe einer Stellung des ersten Industrieroboters abgeglichen verstellbar ist. Das Bestimmen dieser ersten Abgleichgrösse mittels der Steuervorrichtung erfolgt durch die Schritte: Ausrichten des Sichtfelds der 3D-Bildaufnahmeeinrichtung mittels der Antriebseinheit auf zumindest einen Teil der ersten Merkmale des ersten Objekts, das in einer ersten Abgleichstellung des ersten Industrieroboters gehaltenen wird. Aufnehmen mindestens eines ersten dreidimensionalen Bilds. Bestimmen der Lage des ersten Objekts im Raum-Koordinatensystem in der ersten Abgleichstellung des ersten Industrieroboters aus der Position der 3D-Bildaufnahmeeinrichtung, der durch die Winkelmesseinheit erfassten Winkelausrichtung der 3D-Bildaufnahmeeinrichtung, dem ersten dreidimensionalen Bild und der Kenntnis der ersten Merkmale auf dem ersten Objekt. Bestimmen der ersten Abgleichgrösse durch Heranziehen der ersten Abgleichstellung des ersten Industrieroboters und zumindest der bestimmten Lage des ersten Objekts in der ersten Abgleichstellung des ersten Industrieroboters.

Das erste Objekt wird durch die Steuervorrichtung hochpräzise in eine erste Endlage durch die sich solange wiederholenden Schritte verstellt, bis die erste Endlage in einer vorgegebenen Toleranz erreicht ist: Aufnehmen mindestens eines weiteren ersten dreidimensionalen Bilds. Bestimmen der aktuellen Lage des ersten Objekts im Raum-Koordinatensystem aus der Position der 3D-Bildaufnahmeeinrichtung, der durch die Winkelmesseinheit erfassten Winkelausrichtung der 3D-Bildaufnahmeeinrichtung, dem weiteren ersten dreidimensionalen Bild und der Kenntnis der ersten Merkmale auf dem ersten Objekt. Berechnen der Lagedifferenz zwischen der aktuellen Lage des ersten Objekts und der ersten Endlage. Berechnen einer neuen Sollstellung des ersten Industrieroboters unter Berücksichtigung der ersten Abgleichgrösse aus der aktuellen Stellung des ersten Industrieroboters und einer mit der Lagedifferenz verknüpften Grösse. Verstellen des ersten Industrieroboters in die neue Sollstellung.

Das erfindungsgemässe Verfahren und das erfindungsgemässe System werden im Folgenden anhand von schematisch dargestellten Ausführungsbeispielen beschrieben.

Im Einzelnen zeigen
- Figur 1a: das erfindungsgemässe Verfahren und System mit einer optischen 3D-Bildaufnahmeeinrichtung zum Positionieren eines ersten Objekts;
- Figur 1b: ein Flussdiagramm des Verfahrensablaufs;
- Figur 2: das Verfahren und System mit zwei Industrierobotern zum Positionieren eines ersten und zweiten Objekts; und
- Figur 3: das Verfahren und System mit drei Industrierobotern zum Positionieren eines ersten und zweiten Objekts sowie eines Bearbeitungswerkzeugs.

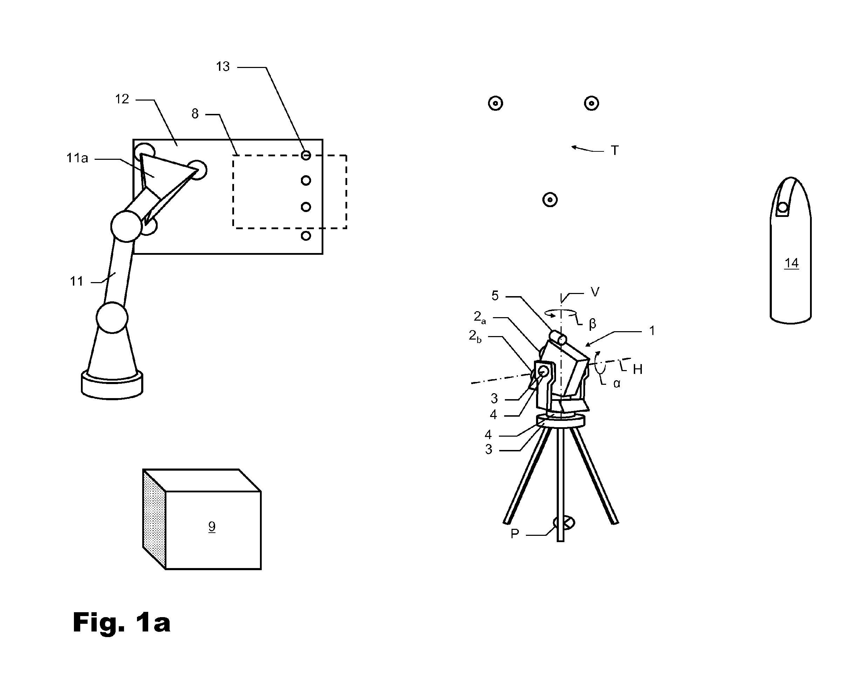

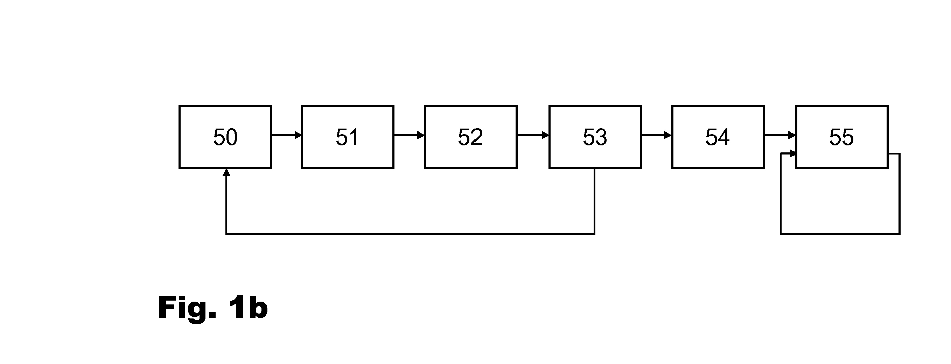

Die Figur 1a zeigt eine erste Ausführungsform des Systems und Verfahrensablaufs zum hochpräzisen Positionieren eines ersten Objekts in eine erste Endlage im Raum. Die Verfahrensschritte sind in Figur 1b veranschaulicht. Die Figuren 1a und 1b werden gemeinsam erläutert.

Das erfindungsgemässe Verfahren dient zum hochpräzisen Positionieren mindestens eines Objekts in eine Endlage im Raum mittels mindestens eines Industrieroboters. Bei der Endlage im Raum handelt es sich um eine Position und Ausrichtung, die das Objekt hochpräzise - insbesondere mit einer Genauigkeit von unter 0,5 Millimeter, vorzugsweise unter 0,2 Millimeter, im Speziellen unter 0,1 Millimeter - einzunehmen hat. Als Endlage wird allgemein diejenige Position und Ausrichtung des Objekts verstanden, in welche das Objekt im Rahmen des Verfahrens gebracht werden soll. Selbstverständlich kann das Objekt im Anschluss in eine oder beliebig viele weitere, neue Endlagen gebracht werden.

Die Verfahrenskomponenten umfassen einen ersten Industrieroboter 11 und eine optische 3D-Bildaufnahmeeinrichtung 1. Zur Durchführung des Verfahrens mittels des Systems ist weiters eine Steuervorrichtung 9 vorgesehen.

Der erste Industrieroboter 11 ist zum Greifen eines ersten Objekts 12 ausgebildet. Beispielsweise handelt es sich bei dem Industrieroboter 11 um einen Gelenkarmroboter mit einem Greifer 11a, der innerhalb sechs Freiheitsgraden verstellbar ist. Der Greifer 11a ist als pneumatischer Greifer, beispielsweise zum Greifen eines Blechstücks, ausgebildet. Bei dem Greifer kann es sich jedoch auch um einen mechanischen Greifer, insbesondere Zangengreifer, oder sonstigen Greifer zum mechanischen Koppeln eines verstellbaren Glieds des Industrieroboters 11 handeln. Der Greifer 11a ist in vorgebbare Stellungen verstellbar, indem dem Industrieroboter 11 eine Sollstellung des Greifers 11a vorgegeben wird. Hierzu verfügt der Industrieroboter 11 über interne Mess-, Regel- und Koordinatentransformationssysteme. Unter einem Industrieroboter 11 ist allgemein ein Handhabungssystem, wie eingangs beschrieben, zu verstehen, das zum Greifen und Positionieren eines Objekts geeignet ist.

Die optischen 3D-Bildaufnahmeeinrichtung 1 ist in einem dreidimensionalen Raum-Koordinatensystem kalibriert und in einer bekannten Position P mit einer bekannten Ausrichtung positioniert. Somit sind sowohl die Position wie auch die Winkelausrichtung mittelbar oder unmittelbar in demjenigen Koordinatensystem, in welchem auch das erste Objekt 12 zu positionieren ist, bekannt. Die 3D-Bildaufnahmeeinrichtung 1 ist zur elektronischen Aufnahme dreidimensionaler Bilder innerhalb eines bestimmten Sichtfelds ausgebildet, wobei sich die dreidimensionalen Bilder jeweils aus einer Vielzahl an Bildpunkten, denen jeweils eine Tiefeninformation zugeordnet ist, zusammensetzen. Die 3D-Bildaufnahmeeinrichtung 1 ist optisch kalibriert, so dass innerhalb des Sichtfelds 8 optische Messungen in der Bildaufnahme erfolgen können.

Unter einer optischen 3D-Bildaufnahmeeinrichtung ist allgemein eine elektronische Vorrichtung zur Aufnahme optisch erfassbarer Punkte mit jeweiliger Tiefeninformation zu verstehen, wobei die optische 3D-Bildaufnahmeeinrichtung über die hierzu erforderliche Ausstattung, insbesondere ein Objektiv und entsprechende Bildaufnahmeelemente, insbesondere einen CCD- oder CMOS-Bildsensor, eine Distanzmesseinheit und eine entsprechende Elektronik, verfügt. Bei dem Objektiv kann es sich um ein beliebiges Objektiv, beispielsweise ein Fixfokus-Objektiv, ein Zoom-Objektiv oder ein Vario-Objektiv, insbesondere mit Motorzoom und Autofokus, handeln. Die optische 3D-Bildaufnahmeeinrichtung ist innenkalibriert, so dass allfällige Fehler insbesondere in der Optik, dem Bildsensor oder der Elektronik, beispielsweise Verzeichnungen etc. berücksichtigt und ausgeglichen werden können. Somit eignet sich die optische 3D-Bildaufnahmeeinrichtung zur photogrammetrischen Messung.

Ausserdem besitzt die optische 3D-Bildaufnahmeeinrichtung 1 mindestens eine Antriebseinheit 3 zum - ein Verstellen des Sichtfelds 8 bewirkenden - Ausrichten der optischen 3D-Bildaufnahmeeinrichtung. Beispielsweise ist die Antriebseinheit 3 eine Schwenkeinheit zum Schwenken der optischen 3D-Bildaufnahmeeinrichtung um zwei Schwenkachsen. Bei diesen Schwenkachsen kann es sich in einer möglichen aber nicht notwendigen Ausführungsvariante um eine in Bezug auf das Raum-Koordinatensystem horizontale Kippachse H und eine vertikale Stehachse V handeln.

Weiters besitzt die optische 3D-Bildaufnahmeeinrichtung 1 eine im Raum-Koordinatensystem kalibrierte Winkelmesseinheit 4 zum hochpräzisen Erfassen der Winkelausrichtung der optischen 3D-Bildaufnahmeeinrichtung, so dass das Sichtfeld 8 im Raum-Koordinatensystem bestimmbar ist. Aufgrund der inneren, sich auf die optische Aufnahmeeinheit und die Winkelmesseinheit beziehende Kalibrierung der optischen 3D-Bildaufnahmeeinrichtung 1 sowie der äusseren Referenzierung der optischen 3D-Bildaufnahmeeinrichtung 1 im Raum-Koordinatensystem definiert jeder Bildpunkt hochpräzise einen Punkt im Raum-Koordinatensystem, der sich erstens aus der Lage des Bildpunkts auf dem Bildsensor, also der zweidimensionalen Bildaufnahme, zweitens der diesem Bildpunkt zugeordneten Tiefeninformation, woraus sich das dreidimensionale Bild ergibt, drittens aus der mittels der Winkelmesseinheit 4 erfassten Ausrichtung der optischen 3D-Bildaufnahmeeinrichtung 1 und viertens der bekannten Position der optischen 3D-Bildaufnahmeeinrichtung 1 sowie fünftens den jeweiligen Kalibrierungsparametern ergibt.

Die Winkelmesseinheit 4 erfasst im gezeigten Ausführungsbeispiel jeweils die horizontale Winkelausrichtung α um die Stehachse V und die vertikale Winkelausrichtung β um die Kippachse H im Raum-Koordinatensystem. Die horizontale Kippachse H und die vertikale Stehachse V schneiden sich im Wesentlichen. Somit ist die optische 3D-Bildaufnahmeeinrichtung 1 als eine Art 3D-Video-Theodolit ausgebildet, wobei hierunter ein Theodolit mit einer 3D-Bildaufnahmevorrichtung, die entweder koaxial in den Theodolit eingebunden ist oder nicht-koaxial insbesondere auf dem Fernrohr des Theodolits angeordnet ist, zu verstehen ist.

Die Position P und Aussenkalibrierungsparameter der optischen 3D-Bildaufnahmeeinrichtung 1 können durch referenzierte externe Messsysteme, beispielsweise optische Messsysteme wie einen Lasertracker 14, bestimmt werden, welche die Position P der optischen 3D-Bildaufnahmeeinrichtung 1 im Raum bestimmen. Dies kann durch Zielmarken, welche auf der optischen 3D-Bildaufnahmeeinrichtung 1 angebracht sind, erfolgen. Auch die externe Kalibrierung der Ausrichtungen kann mittels externer Messsysteme erfolgen. Weiters ist es möglich, die optische 3D-Bildaufnahmeeinrichtung 1 auf einem Referenzpunkt, dessen Position hochpräzise im Raum-Koordinatensystem bekannt ist, insbesondere mittels einer Zwangszentrierung zu positionieren. Alternativ besteht die Möglichkeit, dass sich die optische 3D-Bildaufnahmeeinrichtung mittels eigenen Messsystems im Raum referenziert und kalibriert. Selbstverständlich ist es möglich, andere geeignete Schwenk- und Messvorrichtungen zum Orientieren der optischen 3D-Bildaufnahmeeinrichtung und exakten Erfassen der Ausrichtungen zu verwenden. Jedoch sei darauf hingewiesen, dass ein Theodolit, ein Tachymeter oder eine so genannte Totalstation aufgrund der Winkelmessgenauigkeit zur Verwendung prädestiniert sind.

Die Position P der optischen 3D-Bildaufnahmeeinrichtung 1 im Raum-Koordinatensystem wird beispielsweise durch Zielen auf ortsfeste Zielmarken T mittels der 3D-Bildaufnahmeeinrichtung 1 bestimmt. Alternativ oder zusätzlich kann die Selbstreferenzierung über Triangulation durch Bildaufnahme der ortsfesten Zielmarken und Bildverarbeitung stattfinden.

Die Steuervorrichtung 9 weist eine zur Bildverarbeitung ausgebildete Datenverarbeitungseinrichtung auf. Die Steuervorrichtung 9 steht mindestens mit dem ersten Industrieroboter 11 und der optischen 3D-Bildaufnahmeeinrichtung 1 in Datenverbindung. Der Steuervorrichtung 9 werden die von der optischen 3D-Bildaufnahmeeinrichtung 1 aufgenommenen dreidimensionalen Bilder zur Durchführung der Bildverarbeitung zugeführt. Weiters erhält die Steuervorrichtung 9 die von der Winkelmesseinheit 4 erfassten Winkelausrichtungen der 3D-Bildaufnahmeeinrichtung 1 als Eingangssignal. Die Antriebseinheit 3 ist mittels der Steuervorrichtung 9 zum Ausrichten der 3D-Bildaufnahmeeinrichtung 1 angesteuert. Der erste Industrieroboter 11 kann in Stellungen, die durch die Steuervorrichtung 9 vorgegeben werden, verstellt werden. Die hierzu erforderliche Datenverbindung kann mittels Spannungssignalen, Funksignalen, optischer Signale oder sonstiger Kommunikationswege erfolgen. Die Referenz- und Kalibrierungsparameter, insbesondere die einzelnen Positionen, Ausrichtungen und Abmessungen der beteiligten Komponenten, sind - sofern zur Durchführung des Verfahrens erforderlich - in der Steuervorrichtung 9 gespeichert. Bei der Steuervorrichtung 9 kann es sich um eine Einheit, beispielsweise einen Personal Computer mit geeigneten Schnittstellen, als auch um eine Mehrzahl miteinander kommunizierender oder vernetzter, örtlich getrennter Einzelkomponenten, die beispielsweise Bestandteil einzelner Vorrichtungen sind, handeln. Insbesondere ist es möglich, dass die abstrakt zu verstehende Steuervorrichtung 9 Bestandteil der 3D-Bildaufnahmeeinrichtung 1 und/oder des ersten Industrieroboters 11 ist.

Das erste Objekt 12, das in die Endlage im Raum positioniert werden soll, weist bekannte optisch erfassbare erste Merkmale 13 auf. Es kann sich bei diesen ersten Merkmalen 13 um beliebige Merkmale, die mittels der optischen 3D-Bildaufnahmeeinrichtung 1 erfasst werden können, handeln. Unter dem Begriff "optisch erfassbar" ist also die Erfassbarkeit durch die optische 3D-Bildaufnahmeeinrichtung 1 zu verstehen und nicht zwangsläufig die Sichtbarkeit durch das menschliche Auge.

Die optisch erfassbaren Merkmale können von Merkmalen des Objekt, insbesondere dessen Form, Oberflächenverlauf und Oberflächenbeschaffenheit, beispielsweise Ecken, Kanten, Bohrungen, Aussparungen und Sicken, gebildet werden. Alternativ oder zusätzlich können die Merkmale auf dem Objekt angebracht sein, beispielsweise in Form von Klebe- oder Farbmarkierungen. Vorzugsweise erstrecken sich die Merkmale in mindestens zwei Dimensionen, beispielsweise in Form dreier nicht auf einer Geraden liegender Punkte. Die Merkmale sind derart, dass deren Positionsbestimmungen die Lage, also die Position und Ausrichtung des Objekts im Raum möglichst eindeutig definieren.

Bei dem Objekt 12 handelt es sich um ein beliebiges, im Raum hochpräzise zu positionierendes Objekt, das von dem ersten Industrieroboter 11 gegriffen und gehalten werden kann, beispielsweise um ein Blechteil.

Im Folgenden wird der erfindungsgemässe Verfahrensablauf beschrieben, wobei auch auf die Figur 1b, die den Verfahrensablauf in Form eines Flussdiagramms darstellt, verwiesen sein.

Im Schritt 50 wird das erste Objekt 12, das sich beispielsweise in einer Lagerposition befindet, von dem ersten Industrieroboter 11 mittels dessen Greifers 11a innerhalb einer Greiftoleranz gegriffen und gehalten. Die Greiftoleranz liegt über der Toleranz, innerhalb welcher das erste Objekt 12 in der Endlage positioniert werden soll. Insbesondere pneumatische Greifer ohne Zwangszentrierung zum Objekt ermöglichen kein hochpräzises Greifen, so dass die relative Lage des Objekts zum Greifer eine Toleranz aufweist, die auszugleichen, also zu korrigieren ist.

Im optionalen, in einer Weiterbildung der Erfindung erfolgenden Schritt 51 wird der erste Industrieroboter 11, der das erste Objekt 12 mit dem unbekannten Greiffehler hält, in eine erste Abgleichstellung zum Bestimmen einer ersten Abgleichgrösse verstellt. In dieser Abgleichstellung des ersten Industrieroboters 11 ist das erste Objekt 12 für die optische 3D-Bildaufnahmeeinrichtung 1 zur dreidimensionalen Bildaufnahme gut sichtbar. Sofern diese Sichtbarkeit bereits nach dem Greifen gewährleistet ist und sich das erste Objekt 12 bereits in einer Position befindet, kann dieser Schritt 51 auch entfallen.

Im darauf folgenden Schritt 52 wird eine erste Abgleichgrösse ermittelt, um diese Greiftoleranz zu korrigieren. Diese die Greiftoleranz korrigierende erste Abgleichgrösse für den ersten Industrieroboter 11 dient dazu, dass das erste Objekt 12 im Raum-Koordinatensystem durch Vorgabe einer Stellung des ersten Industrieroboters 11 abgeglichen verstellbar ist. Unter einem abgeglichenen Verstellen ist zu verstehen, dass bei der Vorgabe der Stellung, welche der Greifer 11a des Roboters einnehmen soll, der Greiffehler, mit welchem das Teil gegriffen wurde, korrigiert wird. Der Greiffehler wird also durch eine Korrekturgrösse, die erste Abgleichgrösse, berücksichtigt. Der Greiffehler kann in allen 6 Freiheitsgraden erfolgen, so dass die Abgleichgrösse entsprechende Werte insbesondere in Form eines Tensors annehmen kann. Im Idealfall, also bei exaktem Greifen des ersten Objekts durch den Greifer 11a, wäre die Abgleichgrösse gleich Null.

Das Bestimmen der ersten Abgleichgrösse erfolgt durch folgende Teilschritte. Zunächst wird die optische 3D-Bildaufnahmeeinrichtung 1 mittels der Antriebseinheit 3 auf zumindest einen Teil der ersten Merkmale 13 des ersten Objekts 12, das in der ersten Abgleichstellung des ersten Industrieroboters 11 gehaltenen wird, ausgerichtet, insbesondere geschwenkt. Vorzugsweise befinden sich mindestens drei Punkte, welche die ersten Merkmale 13 bilden, im Sichtfeld 8. Nun wird ein erstes dreidimensionales Bild mittels der optischen 3D-Bildaufnahmeeinrichtung 1 aufgenommen. Aus diesem dreidimensionalen Bild wird darauf folgend die Lage des ersten Objekts 12, das in der ersten Abgleichstellung des ersten Industrieroboters 11 gehalten wird, im Raum-Koordinatensystem bestimmt. Durch die Bestimmung der Position dreier ausgezeichneter Punkte ist diese Lagebestimmung bereits möglich. Die Lage des ersten Objekts 12 wird zum einen bestimmt aus der Kenntnis der Position P der optischen 3D-Bildaufnahmeeinrichtung 1, der durch die Winkelmesseinheit 4 erfassten Winkelausrichtung der optischen 3D-Bildaufnahmeeinrichtung 1 und dem ersten dreidimensionalen Bild. Mittels dieser Informationen ist es bereits möglich, insbesondere durch Bildverarbeitung in der Steuervorrichtung 9 die Position einzelner erfasster Punkte im Raum-Koordinatensystem zu bestimmen. Um die Lage des Objekts hieraus abzuleiten, ist noch die Kenntnis der ersten Merkmale 13 auf dem ersten Objekt 12 erforderlich, um aus der Position oder Lage der ersten Merkmale 13 auf die Lage des ersten Objekts im Raum schliessen zu können. Ist beispielsweise aus einem elektronischen Modell bekannt, dass und an welcher Stelle ein Blechteil spezifische Bohrungen aufweist, so kann aus der Lage dieser Bohrungen auf die Lage des Objekts geschlossen werden. Nun wird die erste Abgleichgrösse durch Heranziehen der ersten Abgleichstellung des ersten Industrieroboters 11, aus welcher sich die Ideallage bei fehlerfreiem Greifen ergibt, und zumindest der bestimmten, also tatsächlichen Lage des ersten Objekts 12 in der ersten Abgleichstellung des ersten Industrieroboters 11 bestimmt.

In einer Weiterbildung der Erfindung sind die Merkmale 13 des Objekts 11 im Wesentlichen aus einem durch die elektronische Datenverarbeitungseinrichtung der Steuervorrichtung 9 verarbeitbaren Modell bekannt. Hierbei kann es sich um ein mittels CAD gewonnenes elektronisches Modell handeln. Mittels einer Bildverarbeitung, die auf der elektronischen Datenverarbeitungseinrichtung ausgeführt wird, werden die Merkmale 13 in dem Modell und/oder in den Bildaufnahmen identifiziert und diese Merkmale 13 aus dem Modell sowie die Merkmale 13 aus den Bildaufnahmen einander zugeordnet. Die Lage des Objekts 12 im Raum-Koordinatensystem wird aus der erfassten Position der aufgenommenen Merkmale 13 im Raum-Koordinatensystem und den zugeordneten Merkmalen 13 bestimmt. Derartige Bildverarbeitungs- und Merkmalidentifikationsverfahren sind aus dem Stand der Technik bekannt und müssen an dieser Stelle nicht weiter erläutert werden.

Da nun bekannt ist, mit welchem Fehler das erste Objekt 12 gegriffen wurde und eine entsprechende erste Abgleichgrösse bestimmt wurde, ist es jetzt möglich, das erste Objekt 12 mittels des ersten Industrieroboters 11 im Rahmen der Messgenauigkeit der Sensoren des ersten Industrieroboters 11 zu positionieren. Diese Messgenauigkeit ist jedoch nicht ausreichend, weshalb es ein weiteres Positionierungsproblem zu lösen gilt.

Beispielsweise aufgrund von Fertigungstoleranzen und Umgebungsparametern ist es möglich, dass das erste Objekt 11, beispielsweise ein Blechteil, selbst einer bestimmten Toleranz in Abmessung und Form unterliegt, die zu berücksichtigen ist. Aus diesem Grunde sieht die Erfindung in einer Weiterbildung die Berücksichtigung von Variationen des ersten Objekts vor.

In einer Weiterbildung der Erfindung gemäss dem optionalen Schritt 53 wird die relative Lage der aufgenommenen Merkmale 13 zueinander ermittelt und mit der relativen Lage der Merkmale, die aus dem oben genannten Modell im Wesentlichen bekannt sind, zueinander verglichen. Bei Überschreiten einer Abweichung zwischen der relativen Lage der aufgenommenen Merkmale 13 und der relativen Lage der aus dem Modell im Wesentlichen bekannten Merkmalen wird in einer Variante der Erfindung eine Fehlermeldung ausgegeben. Im Falle der Fehlermeldung wird in einer Fortbildung der Erfindung das Objekt 12 gegen ein neues Objekt 12 ausgetauscht, so dass das Verfahren mit dem Schritt 50 fortgeführt wird, wie in Figur 1b exemplarisch gezeigt. Alternativ wird das Modell dem erfassten Objekt 12 angepasst. Somit ist es möglich, dass das beispielsweise mittels CAD gewonnene Modell den tatsächlichen Abmessungen des gegriffenen Objekts 12 angepasst wird. Dieses angepasste Modell bestimmt in diesem Fall die Endlage, welche das Objekt 12 einnehmen soll, im Raum-Koordinatensystem. Wird die Endlage beispielsweise durch einen Teilabschnitt des Objekts 12, insbesondere eine Kante, bestimmt, welche die Endlage einzunehmen hat, so wird eine Verformung des Teils durch Anpassung des Modells entsprechend berücksichtigt.

Im ebenfalls optionalen Schritt 54 wird der erste Industrieroboter 11 unter Berücksichtigung der ersten Abgleichgrösse von der ersten Abgleichstellung in eine Stellung verstellt, in welcher das erste Objekt 12 in einer ersten Annäherungslage nahe der ersten Endlage positioniert ist. Dies erfolgt, indem dem ersten Industrieroboter 11, dem bisher die erste Abgleichstellung vorgegeben wurde, eine neue Stellung als Eingangsgrösse vorgegeben wird, in welcher sich das erste Objekt 12 in der ersten Annäherungslage befindet. Das Sichtfeld 8 der 3D-Bildaufnahmeeinrichtung 1 wird mittels der Antriebseinheit 3 auf zumindest einen Teil der ersten Merkmale 13 des ersten Objekts 12, das nun in der ersten Annäherungslage positioniert ist, ausgerichtet.

Im Schritt 55 wird das erste Objekt 12 hochpräzise in die erste Endlage verstellt. Hierzu werden die folgenden Schritte solange wiederholt, bis die erste Endlage in einer vorgegebenen Toleranz erreicht ist. Zunächst wird mindestens ein weiteres erstes dreidimensionales Bild mittels der 3D-Bildaufnahmeeinrichtung 1 aufgenommen. Die aktuelle Lage des ersten Objekts 12 im Raum-Koordinatensystem wird wieder aus der Position P der 3D-Bildaufnahmeeinrichtung 1, der durch die Winkelmesseinheit 4 erfassten Winkelausrichtung der 3D-Bildaufnahmeeinrichtung 1, dem weiteren ersten dreidimensionalen Bild und der Kenntnis der ersten Merkmale 13 auf dem ersten Objekt 12 bestimmt. Die aktuelle Lage wird nun mit der Solllage, also der ersten Endlage verglichen. Die Lagedifferenz zwischen der aktuellen Lage des ersten Objekts 12 und der ersten Endlage wird berechnet. Darauf folgend wird eine neue Sollstellung des ersten Industrieroboters 11 berechnet. Dies erfolgt unter Berücksichtigung der ersten Abgleichgrösse aus der aktuellen Stellung des ersten Industrieroboters 11 und einer mit der Lagedifferenz verknüpften Grösse. Die mit der Lagedifferenz verknüpfte Grösse ist vorzugsweise die mit einem Faktor kleiner oder gleich 1 multiplizierte Lagedifferenz. Dies bedeutet, dass die neue Sollstellung eine Stellung des Industrieroboters 11 ist, bei welcher sich das erste Objekt 12 in einer Lage zwischen der aktuellen Lage und der ersten Endlage befinden wird. Ist der Faktor gleich 1, ist die neue Sollstellung eine Stellung, in welcher das erste Objekt 12 von der aktuellen Lage in die erste Endlage annähernd gebracht wird, soweit dies mittels der unpräziseren Sensorik und Aktorik des Industrieroboters 11 möglich ist. Da diese jedoch regelmässig zu ungenau ist, um das erste Objekt 12 mittels nur eines Schritts 55 bis in die erste Endlage in der vorgegebenen Toleranz zu bringen, ist der Faktor vorzugsweise kleiner 1, vorzugsweise kleiner 0,95, insbesondere kleiner 0,9, beispielsweise kleiner 0,8, jedoch vorzugsweise grösser 0. Mittels eines Faktors kleiner 1 aber grösser 0 ist die neue Sollstellung des Industrieroboters 11 derart, dass sich nach dem Verstellen des Industrieroboters 11 in die neue Sollstellung das erste Objekt 12 der ersten Endlage genähert, diese jedoch noch nicht ganz erreicht hat. Der erste Industrieroboter 11 wird im Anschluss durch Vorgabe der neuen Sollstellung verstellt. In anderen Worten erhält der erste Industrieroboter eine neue Positions-Eingangsgrösse, aus welcher sich seine neue Sollstellung ergibt. Diese neue Sollstellung wird somit mittels der Sensorik und Aktorik des ersten Industrieroboters 11 angefahren. Im Anschluss wiederholen sich die genannten Schritte. Es wird also erneut mindestens ein weiteres erstes dreidimensionales Bild aufgenommen, anhand dessen die aktuelle Lage des ersten Objekts 12 bestimmt und die Lagedifferenz zwischen der aktuellen Lage des ersten Objekts 12 und der ersten Endlage berechnet. Liegt das erste Objekt wieder nicht innerhalb der geforderten Toleranz der ersten Endlage, wird dem ersten Industrieroboter 11 erneut eine neue Sollstellung vorgegeben, die sich aus seiner aktuellen Stellung und der mit der Lagedifferenz verknüpften Grösse unter Berücksichtigung der ersten Abgleichgrösse berechnet. Diese Schritte werden solange wiederholt, bis das erste Objekt 12 hochpräzise innerhalb der Toleranz die erste Endlage erreicht hat.

Ein wesentlicher Vorteil des beschriebenen Verfahrens besteht darin, dass das Erfassen der Lage des Objekts im Raum mittels einer sehr geringen Anzahl an dreidimensionalen Bildaufnahmen, die ausser den Merkmalen des Objekts keine weiteren Referenzmarken zeigen müssen, erfolgen kann, wodurch das Verfahren erheblich beschleunigt wird. Nach dem Verstellen des Sichtfelds der 3D-Bildaufnahmeeinrichtung kann ohne Neureferenzierung die photogrammetrische Bildauswertung erfolgen. Dies ist insbesondere bei industriellen Anwendungen von Bedeutung, bei denen Objekte von Handhabungssystemen über grössere Strecken bewegt und im Anschluss präzise positioniert werden, da ein Ändern des Sichtfelds in Form eines Schwenkens der 3D-Bildaufnahmeeinrichtung auf die Merkmale der Objekte weder eine erneute Referenzierung noch das Zurückgreifen auf zuvor gemessene Bilder und/oder Referenzmarkierungen erfordert. Somit ist ein schnelles, hochpräzises und prozesssicheres Positionieren gewährleistet. Weil das Schwenken der 3D-Bildaufnahmeeinrichtung zu keinem Zeitverlust aufgrund Neureferenzierung oder Koppelorientierung führt, können die Aufnahmeeinrichtungen entfernt vom Prozess, insbesondere in 2 bis 5 Metern Entfernung, angeordnet sein, so dass der Prozess nicht beeinträchtigt wird und die Messtechnik nicht dem Prozess unmittelbar ausgesetzt ist. Dies ist insbesondere bei Schweissverfahren von Vorteil, da die sensible Messtechnik kaum beeinflusst wird.

In einer möglichen Ausführungsform ist die 3D-Bildaufnahmeeinrichtung 1 derart ausgebildet ist, dass mindestens eine erste Kamera 2a mittels der Antriebseinheit 3 um jeweils eine in Bezug auf das Raum-Koordinatensystem horizontale Kippachse H und eine vertikale Stehachse V ausrichtbar ist. Durch die Winkelmesseinheit 4 kann jeweils die horizontale Winkelausrichtung α um die Stehachse V und die vertikale Winkelausrichtung β um die Kippachse H im Raum-Koordinatensystem erfasst werden. Insbesondere schneiden sich die horizontale Kippachse H und die vertikale Stehachse V im Wesentlichen. Mittels der ersten Kamera 2a ist die Aufnahme eines zweidimensionalen Bildes, das sich aus einer Vielzahl an Bildpunkten zusammensetzt, möglich. Um all diesen Bildpunkten oder zumindest Gruppen von Bildpunkten, worunter ebenfalls vereinfacht ein Bildpunkt zu verstehen ist, eine Tiefeninformation zuzuordnen und das dreidimensionale Bild aus dem zweidimensionalen Bild abzuleiten, bestehen unterschiedliche Möglichkeiten, die im Folgenden beschrieben werden.

In einer Variante weist die 3D-Bildaufnahmeeinrichtung 1 einen elektrooptischen Distanzmesser 5 auf. Abhängig von der Art des elektrooptischen Distanzmessers 5 ist sein Messstrahl relativ zur ersten Kamera 2a ausrichtbar und dessen relative Winkelausrichtung zur ersten Kamera 2a hochpräzise erfassbar. Das dreidimensionale Bild wird durch Erfassen der Tiefeninformationen und durch Zuordnen der Tiefeninformationen zu der Vielzahl an Bildpunkten erzeugt. Die Tiefeninformationen werden hierbei durch eine optische Tiefenmessung auf mit den Bildpunkten korrespondierende Abschnitte des Objekts 12 mittels des elektrooptischen Distanzmessers 5 und insbesondere der jeweiligen relativen Winkelausrichtung des Messstrahls zur ersten Kamera 2a erfasst. Zum Erfassen der Tiefeninformation kann ein Laserscanner zum Einsatz kommen.

Beispielsweise ist der elektrooptische Distanzmesser 5 als Punktscanner ausgebildet. Das Erfassen der Tiefeninformationen erfolgt durch ein serielles Scannen mittels des Punktscanners, wobei mindestens ein punktartiger Messstrahl eine mit dem Sichtfeld 8 korrespondierende Fläche des Objekts 12 punktweise, beispielsweise Zeile für Zeile, optisch abtastet.

Alternativ ist der elektrooptische Distanzmesser 5 als Linienscanner ausgebildet. Das Erfassen der Tiefeninformationen erfolgt durch ein paralleles Scannen mittels des Linienscanners, wobei mindestens ein linienartiger Messstrahl eine mit dem Sichtfeld 8 korrespondierende Fläche des Objekts 12 linienweise optisch abtastet.

Ausserdem besteht die Möglichkeit, den elektrooptischen Distanzmesser 5 als Flächentiefenmesser, auch Flächenscanner genannt, auszubilden. Das Erfassen der Tiefeninformationen erfolgt durch ein vollparalleles Abtasten mittels des Flächentiefenmessers, wobei mindestens ein flächiger Messstrahl, der insbesondere durch ein Bündel aus einer Vielzahl an Messstrahlen gebildet wird, eine mit dem Sichtfeld 8 korrespondierende Fläche des Objekts 12 flächenweise optisch abtastet. Der optische Flächentiefenmesser tastet somit insbesondere vollparallel und im Wesentlichen zeitgleich die gesamte Fläche des Sichtfeldes 8 der 3D-Bildaufnahmeeinrichtung 1 ab. Das dreidimensionale Bild wird durch Erfassen der Tiefeninformationen mittels des optischen Flächentiefenmessers durch die vollparallele Tiefenmessung und durch Zuordnen der Tiefeninformationen zu der Vielzahl an Bildpunkten erzeugt. Die den Bildpunkten zuordenbaren Tiefeninformationen werden somit durch eine flächige Tiefenaufnahme der mit dem Sichtfeld 8 korrespondierenden Fläche des Objekts 12 gewonnen.

Derartige Punkt-, Linien- und Flächenscanner zum seriellen bzw. parallelen bzw. vollparallelen Scannen sind aus dem Stand der Technik bekannt, wie oben beschrieben. Vorzugsweise sind der elektrooptische Distanzmesser 5 und die erste Kamera 2ₐ miteinander gekoppelt und gemeinsam mittels der Antriebseinheit 3 verstellbar. Insbesondere bilden sie eine gemeinsame Einheit.

Es ist alternativ oder zusätzlich möglich, dass die erste Kamera 2ₐ der 3D-Bildaufnahmeeinrichtung 1 als RIM-Kamera zur direkten Aufnahme des dreidimensionalen Bildes ausgebildet ist. Die erste Kamera 2ₐ ist also selbst derart ausgebildet, dass jedem Bildpunkt oder einer Vielzahl an Gruppen von Bildpunkten eine Tiefeninformation zugeordnet werden kann.

Derartige insbesondere laufzeitbasierte Range Imaging (RIM) Kameras sind bereits seit einigen Jahren auf dem Markt erhältlich. Bei einer RIM-Kamera sendet ein Signalemitter modulierte Strahlung aus. Die dabei verwendeten Modulationsarten basieren bei den aktuellen Sensoren in der Regel auf dem Prinzip der Amplitudenmodulation. Ein Teil der ausgesendeten Strahlung wird im Objektraum reflektiert und teilweise von einer vorgeschalteten Optik auf einem speziellen Bildsensor abgebildet. Die Besonderheit dieses Bildsensors liegt darin, dass jedes einzelne Pixel in der Lage ist, die empfangene Strahlung zu demodulieren, d.h. insbesondere die Phasenlage bzw. die Laufzeit des Signals zu bestimmen. Als Beispiel für derartige RIM-Kameras sind der SwissRanger SR-2 und SwissRanger SR-3000 von CSEM (Schweiz) sowie das Modell 3k-S von PMD Technologies (Deutschland) zu nennen. SwissRanger besitzt einen kombinierten CCD/CMOS-Sensor. Die Distanzmessung basiert auf dem Phasendifferenzverfahren, wobei der Eindeutigkeitsbereich bis 7,5 Metern reicht. Dabei wird das vom Objekt reflektierte Signal über die Optik auf das jeweilige Pixel des Sensors abgebildet, die zugehörige Distanzberechnung wird durchgeführt und das Ergebnis der Messung ist dann ein Distanzbild. Der Sensor besitzt eine Grösse von 124 x 160 Pixeln (SR-2) bzw. 176 x 144 Pixeln (SR-3000). Ausserdem existieren RIM-Kameras mit einer Implementierung von Single Photon Avalanche Dioden (SPAD) in CMOS-Bildsensoren. Dadurch wird das direkte Laufzeitmessverfahren realisiert, mit der die Distanzmessung auf eine Laufzeitmessung reduziert wird. Die Demodulation der empfangenen Strahlung wird bei den bekannten RIM-Kameras regelmässig mit indirekter Laufzeitmessung insbesondere über vier sequentielle Intensitätsmessungen vollzogen. Dabei wird in jedem Pixel die sinusförmige, amplitudenmodulierte Welle mithilfe von vier, um 90° verschobenen, integrierenden Intensitätsmessungen rekonstruiert. Aus diesen vier Messungen kann die Phasenlage und damit die zurückgelegte Distanz berechnet werden. Aufgrund der geometrischen Beziehungen im Kamerasystem kann nun für jedes Pixel aus den Pixelkoordinaten und der Distanz eine dreidimensionale Koordinate gerechnet werden. Aufgrund der Simultaneität der Distanzmessung in allen Pixeln kann mit jedem Bild ein entsprechendes 3D Modell abgeleitet werden.

In einer weiteren Variante, wie in Figur 1a gezeigt, besitzt die 3D-Bildaufnahmeeinrichtung 1 eine zweite Kamera 2_{b}, die mit der ersten Kamera 2a derart - insbesondere innerhalb eines gemeinsamen Gehäuses - gekoppelt und die derart zur ersten Kamera 2ₐ beanstandet angeordnet ist, dass die zumindest teilweise überschneidenden Sichtfelder der Kameras 2ₐ, 2_{b} in ihrem Überlappungsbereich das Sichtfeld 8 der 3D-Bildaufnahmeeinrichtung 1 bilden. Das dreidimensionale Bild im Sichtfeld 8 der 3D-Bildaufnahmeeinrichtung 1 wird aus der Kenntnis der relativen Perspektiven der Kameras 2ₐ, 2_{b} zueinander mittels Bildverarbeitung erzeugt. Derartige 3D-Bildaufnahmeeinheiten sind beispielsweise die unter dem Markennamen "Optigo" und "OptiCell" bekannten Bildaufnahmesysteme der Firma "CogniTens", die drei in einem gleichschenkligen Dreieck angeordnete Kameras enthalten, sowie das System "Advent" der Firma "ActiCM" mit zwei nebeneinander angeordneten hochauflösenden CCD-Kameras sowie einem Projektor zur Projektion von strukturiertem Licht auf den aufzunehmenden Abschnitt.

Das oben dargestellte Positionierungsverfahren wurde für die freie Positionierung eines einzelnen ersten Objekts im Raum beschrieben. Es ist jedoch weiters möglich, mindestens ein zweites Objekt unter Zuhilfenahme der bereits beschriebenen Verfahren und Komponenten zu positionieren und/oder das erste Objekt relativ zum zweiten Objekt, und umgekehrt, hochpräzise auszurichten. Derartige Verfahren werden im Folgenden beschrieben. Es ist ebenfalls realisierbar, die oben beschrieben Merkmale auch mit der Positionierung des zweiten Objekts und jedes weiteren Objekts zu kombinieren. Zur einfacheren Darstellung wird jedoch darauf verzichtet, die bei der Positionierung des ersten Objekts möglichen Weiterbildungen auch für die Positionierung der weiteren Objekte zu beschreiben. Diese Kombinationen sind jedoch ebenfalls Bestandteil dieser Erfindung.

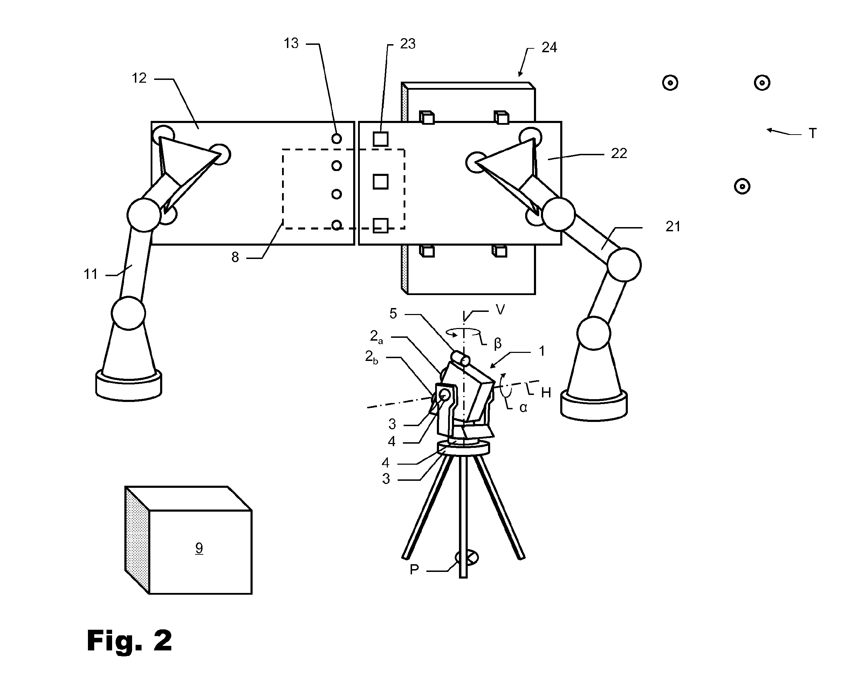

Eine solche Weiterbildung zeigt Figur 2. Neben den wesentlichen Komponenten der Ausführungsform aus Figur 1a, auf welche hier nicht erneut eingegangen wird, sind ein zweiter Industrieroboter 21 und eine Objekthalterung 24 vorgesehen. Vor dem hochpräzisen Verstellen des ersten Objekts 12 in die erste Endlage, wie oben beschrieben, wird ein zweites Objekt 22 von dem zweiten Industrieroboter 21 gegriffen und in die Objekthalterung 24 platziert. Die Objekthalterung 24 ist als so genannte "Fixture" ausgebildet, die das zweite Objekt 22 aufnehmen kann. Hierzu ist es möglich, dass die Objekthalterung 24 eine entsprechende Form - beispielsweise zum Vermeiden einer Deformation des Objekts - aufweist und/oder entsprechende Spannvorrichtungen zum Fixieren des Objekts hat. Nach dem Platzieren in der Objekthalterung 24 befindet sich das zweite Objekt 22 in einer zweiten Endlage im Raum-Koordinatensystem. Alternativ ist es möglich, das zweite Objekt nicht mittels eines zweiten Industrieroboters 21 sondern manuell in der Objekthalterung 24 zu platzieren. In einer Ausführungsvariante ist die Objekthalterung 24 derart zwangszentrierend ausgebildet, dass das zweite Objekt 22 hochpräzise in der vorgegebenen zweiten Endlage platziert wird. Ein Erfassen der zweiten Endlage mittels Messtechnik kann in diesem Fall entfallen. Ist dies jedoch nicht der Fall, so wird die zweite Endlage im Raum-Koordinatensystem bestimmt. Das zweite Objekt 22 weist hierzu bekannte optisch erfassbare zweite Merkmale 23 auf. Nach dem Platzieren des zweiten Objekts 22 in der Objekthalterung 24 wird die zweite Endlage des zweiten Objekts 22 im Raum-Koordinatensystem bestimmt, indem zunächst das Sichtfeld 8 der 3D-Bildaufnahmeeinrichtung 1 mittels der Antriebseinheit 3 auf zumindest einen Teil der zweiten Merkmale 23 des zweiten Objekts 22 ausgerichtet wird. Ein zweites dreidimensionales Bild wird aufgenommen. Die zweite Endlage des zweiten Objekts 22 im Raum-Koordinatensystem wird nun bestimmt aus der Position P der 3D-Bildaufnahmeeinrichtung 1, der durch die Winkelmesseinheit 4 erfassten Winkelausrichtungen der 3D-Bildaufnahmeeinrichtung 1, dem zweiten dreidimensionalen Bild und der Kenntnis der zweiten Merkmale 23 auf dem zweiten Objekt 22.

Alternativ wird vor dem hochpräzisen Verstellen des ersten Objekts 12 in die erste Endlage das zweite Objekt 22 von dem zweiten Industrieroboter 21 innerhalb einer Greiftoleranz gegriffen und nicht in die Objekthalterung 24 gelegt, sondern gehalten. Der zweite Industrieroboter 21 wird in eine Endstellung des zweiten Industrieroboters 21 verstellt, in welcher sich das zweite Objekt 22 in der zweiten Endlage befindet. Die zweite Endlage des zweiten Objekts 22 wird im Raum-Koordinatensystem bestimmt durch folgende Schritte: Ausrichten des Sichtfelds 8 der 3D-Bildaufnahmeeinrichtung 1 mittels der Antriebseinheit 3 auf zumindest einen Teil der zweiten Merkmale 23 des zweiten Objekts 22. Aufnehmen mindestens eines zweiten dreidimensionalen Bilds. Bestimmen der zweiten Endlage des zweiten Objekts 22 im Raum-Koordinatensystem aus der Position P der 3D-Bildaufnahmeeinrichtung 1, der durch die Winkelmesseinheit 4 erfassten Winkelausrichtung der 3D-Bildaufnahmeeinrichtung 1, dem zweiten dreidimensionalen Bild und der Kenntnis der zweiten Merkmale 23 auf dem zweiten Objekt 22.

Die erste Endlage für das erste Objekt 12 wird in diesen Fällen der Figur 2 aus der zweiten Endlage des zweiten Objekts 22 und einer vorgegebenen Relativlage zwischen dem ersten Objekt 12 und dem zweiten Objekt 22 berechnet. Da das erste Objekt 12 hochpräzise relativ zum zweiten Objekt 22 positioniert ist, kann nun beispielsweise ein Fügeverfahren zum präzisen Verbinden der beiden Objekte durchgeführt werden.

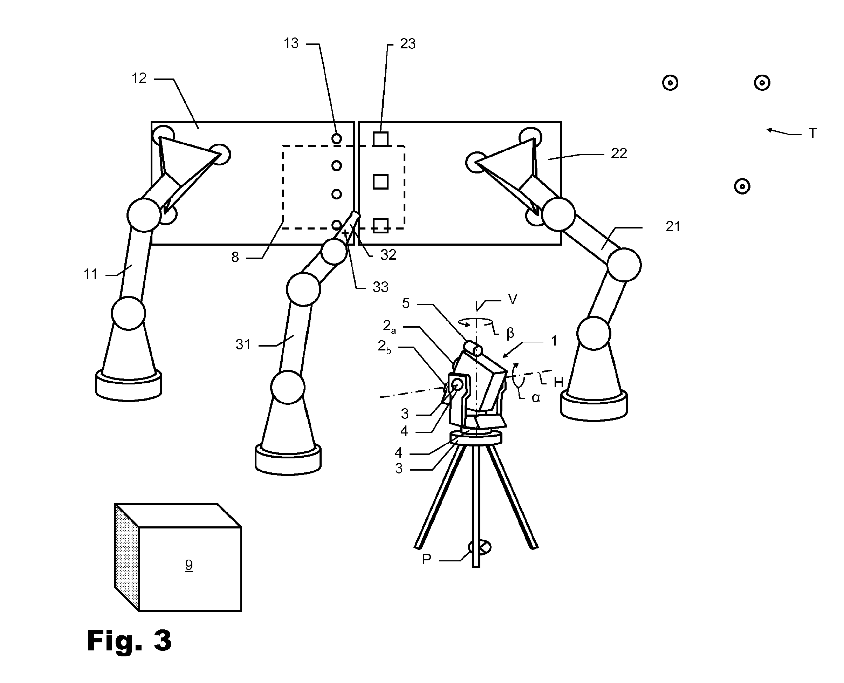

In Figur 3 ist eine weitere Ausführungsform der Erfindung gezeigt, bei welcher ein zweites Objekt 22 sowie ein drittes Objekt 32, das als Bearbeitungswerkzeug ausgebildet ist, hochpräzise verstellt werden.

Das zweite Objekt 22, das bekannte optisch erfassbare zweite Merkmale 23 hat, wird von einem zweiten Industrieroboter 21 innerhalb einer Greiftoleranz gegriffen und gehalten. Eine die Greiftoleranz korrigierende zweite Abgleichgrösse wird für den zweiten Industrieroboter 21 bestimmt, so dass das zweite Objekt 22 im Raum-Koordinatensystem durch Vorgabe einer Stellung des zweiten Industrieroboters 21 abgeglichen verstellbar ist. Das Bestimmen der zweiten Abgleichgrösse erfolgt durch Ausrichten des Sichtfelds 8 der 3D-Bildaufnahmeeinrichtung 1 mittels der Antriebseinheit 3 auf zumindest einen Teil der zweiten Merkmale 23 des zweiten Objekts 22, das in einer zweiten Abgleichstellung des zweiten Industrieroboters 21 gehaltenen wird. Es wird mindestens ein zweites dreidimensionales Bild aufgenommen. Die Lage des zweiten Objekts 22 im Raum-Koordinatensystem in der zweiten Abgleichstellung des zweiten Industrieroboters 21 wird bestimmt aus der Position P der 3D-Bildaufnahmeeinrichtung 1, der durch die Winkelmesseinheit 4 erfassten Winkelausrichtung der 3D-Bildaufnahmeeinrichtung 1, dem zweiten dreidimensionalen Bild und der Kenntnis der zweiten Merkmale 23 auf dem zweiten Objekt 22. Die zweite Abgleichgrösse wird bestimmt durch Heranziehen der zweiten Abgleichstellung des zweiten Industrieroboters 21 und zumindest der bestimmten Lage des zweiten Objekts 22 in der zweiten Abgleichstellung des zweiten Industrieroboters 21. Im Anschuss wird das zweite Objekt 22 hochpräzise in eine zweite Endlage verstellt. Dies geschieht durch die sich bis zum Erreichen der zweiten Endlage in einer vorgegebenen Toleranz wiederholenden folgenden Schritte. Zunächst wird mindestens ein weiteres zweites dreidimensionales Bild aufgenommen. Die aktuelle Lage des zweiten Objekts 22 im Raum-Koordinatensystem wird bestimmt aus der Position P der 3D-Bildaufnahmeeinrichtung 1, der durch die Winkelmesseinheit 4 erfassten Winkelausrichtung der 3D-Bildaufnahmeeinrichtung 1, dem weiteren zweiten dreidimensionalen Bild und der Kenntnis der zweiten Merkmale 23 auf dem zweiten Objekt 22. Die Lagedifferenz zwischen der aktuellen Lage des zweiten Objekts 22 und der zweiten Endlage wird berechnet. Nach dem Berechnen einer neuen Sollstellung des zweiten Industrieroboters 21 unter Berücksichtigung der zweiten Abgleichgrösse aus der aktuellen Stellung des zweiten Industrieroboters 21 und einer mit der Lagedifferenz verknüpften Grösse wird der zweite Industrieroboter 21 in die neue Sollstellung verstellt. Diese Schritte werden wiederholt, bis das zweite Objekt 22 die zweite Endlage in der vorgegebenen Toleranz erreicht hat.

Anstelle einer relativen Positionierung der beiden Objekte 12 und 22 gemäss Figur 2 werden also in dieser Ausführungsform der Figur 3 beide Objekte 12 und 22 unabhängig voneinander hochpräzise einzeln positioniert.

In einer Weiterbildung der Erfindung wird nach dem Greifen des zweiten Objekts 22 der zweite Industrieroboter 21 in die zweite Abgleichstellung des zweiten Industrieroboters 21 zum Bestimmen der zweiten Abgleichgrösse verstellt.

Eine weitere Ausführungsvariante der Erfindung sieht vor, dass vor den sich bis zum Erreichen der zweiten Endlage in einer vorgegebenen Toleranz wiederholenden Schritten der zweite Industrieroboter 21 unter Berücksichtigung der zweiten Abgleichgrösse von der zweiten Abgleichstellung in eine Stellung verstellt wird, in welcher das zweite Objekt 22 in einer zweiten Annäherungslage nahe der zweiten Endlage positioniert ist. Im Anschluss wird das Sichtfeld 8 der 3D-Bildaufnahmeeinrichtung 1 mittels der Antriebseinheit 3 auf zumindest einen Teil der zweiten Merkmale 23 des zweiten Objekts 22, das in der zweiten Annäherungslage positioniert ist, ausgerichtet.

Wie ebenfalls in Figur 3 veranschaulicht, jedoch auch bei der Ausführungsform von Figur 2 möglich, ist ein als Bearbeitungswerkzeug ausgebildetes drittes Objekt 32 vorgesehen. Das Bearbeitungswerkzeug 32 wird von einem dritten Industrieroboter 31 innerhalb einer Haltetoleranz gehalten. Das Bearbeitungswerkzeug 32 oder ein hierzu gekoppeltes Teil des dritten Industrieroboters 31, beispielsweise die Aufnahme des Bearbeitungswerkzeugs 32, weist bekannte optisch erfassbare dritte Merkmale 33 auf. Um das Bearbeitungswerkzeug 32 im Raum-Koordinatensystem durch Vorgabe einer Stellung des dritten Industrieroboters 31 abgeglichen verstellen zu können, wird eine die Haltetoleranz korrigierende dritte Abgleichgrösse für den dritten Industrieroboter 31 bestimmt. Hierzu wird zunächst das Sichtfeld 8 der 3D-Bildaufnahmeeinrichtung 1 mittels der Antriebseinheit 3 auf zumindest einen Teil der dritten Merkmale 33 ausgerichtet. Das Bearbeitungswerkzeug 32 wird hierbei in einer dritten Abgleichstellung des dritten Industrieroboters 31 gehaltenen. Mindestens ein drittes dreidimensionales Bild wird aufgenommen. Die Lage des Bearbeitungswerkzeugs 32 im Raum-Koordinatensystem in der dritten Abgleichstellung des dritten Industrieroboters 31 wird bestimmt aus der Position P der 3D-Bildaufnahmeeinrichtung 1, der durch die Winkelmesseinheit 4 erfassten Winkelausrichtung der 3D-Bildaufnahmeeinrichtung 1, dem dritten dreidimensionalen Bild und der Kenntnis der dritten Merkmale 33. Das Bestimmen der dritten Abgleichgrösse erfolgt durch Heranziehen der dritten Abgleichstellung des dritten Industrieroboters 31 und zumindest der bestimmten Lage des Bearbeitungswerkzeugs 32 in der dritten Abgleichstellung des dritten Industrieroboters 31.

Weiters sieht die Erfindung vor, dass das Bearbeitungswerkzeug 32 hochpräzise in eine dritte Endlage verstellt wird durch die folgenden, sich bis zum Erreichen der dritten Endlage in einer vorgegebenen Toleranz wiederholenden Schritte. Mindestens ein weiteres drittes dreidimensionales Bild wird aufgenommen. Die aktuelle Lage des Bearbeitungswerkzeugs 32 im Raum-Koordinatensystem wird bestimmt aus der Position P der 3D-Bildaufnahmeeinrichtung 1, der durch die Winkelmesseinheit 4 erfassten Winkelausrichtung der 3D-Bildaufnahmeeinrichtung 1, dem weiteren dritten dreidimensionalen Bild und der Kenntnis der dritten Merkmale 33. Die Lagedifferenz zwischen der aktuellen Lage des dritten Objekts 32 und der dritten Endlage wird berechnet. Eine neue Sollstellung des dritten Industrieroboters 31 wird unter Berücksichtigung der dritten Abgleichgrösse aus der aktuellen Stellung des dritten Industrieroboters 21 und einer mit der Lagedifferenz verknüpften Grösse berechnet. Im Anschluss wird der dritte Industrieroboter 31 in die neue Sollstellung verstellt. Diese Schritte werden solange wiederholt, bis sich das Bearbeitungswerkzeug 32 im Toleranzbereich der dritten Endlage befindet.

Das Bearbeitungswerkzeug 32 ist beispielsweise ein Schweisswerkzeug zum fügenden Schweissen des ersten Objekts 12 und des zweiten Objekts 22. Beliebige andere Bearbeitungswerkzeuge, insbesondere Fügewerkzeuge, sind ebenfalls verwendbar. Auch wenn an dieser Stelle ein Bearbeitungswerkzeug 32 in Kombination mit einem ersten Objekt 12 und einem zweiten Objekt 22, insbesondere zum Fügen dieser Objekt, beschrieben wurde, umfasst die Erfindung ebenfalls das Positionieren des Bearbeitungswerkzeugs relativ zu lediglich einem Objekt. Dies kann beispielsweise bei einem Bearbeitungswerkzeug, das einen Arbeitsschritt, beispielsweise einen spanenden Fertigungsschritt, an lediglich einem Objekt durchführt, der Fall sein.

Die Erfindung umfasst auch die Kombinationen nicht explizit kombinierter Merkmale.

Die beschriebenen Systemkomponenten, insbesondere die Messkomponenten wie die Aufnahmeeinrichtungen, zeichnen sich durch ihre Mobilität und Flexibilität aus. Es ist somit möglich, das beschrieben Verfahren mittels eigenständiger Komponenten, die innerhalb verhältnismässig kurzer Zeit in einem Fertigungssystem installiert werden können, durchzuführen. Durch selbstkalibrierende und selbstreferenzierende Komponenten ist es möglich, selbst unter erschwerten Betriebsbedingungen eine ausreichende Prozesssicherheit zu gewährleisten. Selbst verhältnismässig unpräzise Handhabungssysteme mit relativ ungenauen Messsystemen können aufgrund der Bestimmung von Abgleichgrössen und sich bis zum Erreichen der Endlage wiederholender Schritte zum hochpräzisen Positionieren von Objekten verwendet werden. Die Erfindung ermöglicht es, ohne unmittelbare Prozessbeteiligung berührungslos und ausreichend beabstandet eine rasche Erfassung der Lage der Objekte innerhalb eines sehr grossen Erfassungsbereichs durchzuführen. Ein Schwenken der 3D-Bildaufnahmeeinrichtung führt zu keiner Verzögerung des Messvorgangs, die durch erneute Referenzierung der Kameras bedingt ist, da ein erneutes Referenzieren erfindungsgemäss entfallen kann. Somit zeichnet sich das erfindungsgemässe Verfahren und System zum hochpräzisen Positionieren von Objekten im Raum durch eine hohe Prozessgeschwindigkeit aus.

## Patentansprüche

1. Verfahren zum hochpräzisen Positionieren mindestens eines Objekts in eine Endlage im Raum mittels eines Industrieroboters, mit
• einem in vorgebbare Stellungen verstellbaren ersten Industrieroboter (11) und
• einer optischen 3D-Bildaufnahmeeinrichtung (1),
□ die in einem dreidimensionalen Raum-Koordinatensystem kalibriert und in einer bekannten Position (P) mit einer bekannten Ausrichtung positioniert ist,
□ die zur elektronischen Aufnahme dreidimensionaler Bilder innerhalb eines bestimmten Sichtfelds (8) ausgebildet ist, wobei sich die dreidimensionalen Bilder jeweils aus einer Vielzahl an Bildpunkten, denen jeweils eine Tiefeninformation zugeordnet ist, zusammensetzen,
□ die eine Antriebseinheit (3) zum - ein Verstellen des Sichtfelds (8) bewirkenden - Ausrichten der 3D-Bildaufnahmeeinrichtung (1) aufweist und
□ die eine im Raum-Koordinatensystem kalibrierte Winkelmesseinheit (4) zum hochpräzisen Erfassen der Winkelausrichtung der 3D-Bildaufnahmeeinrichtung (1) besitzt, so dass das Sichtfeld (8) im Raum-Koordinatensystem bestimmbar ist,
wobei
• ein erstes Objekt (12), das bekannte optisch erfassbare erste Merkmale (13) aufweist, von dem ersten Industrieroboter (11) innerhalb einer Greiftoleranz gegriffen wird und gehalten wird,
• eine derartige, die Greiftoleranz korrigierende erste Abgleichgrösse für den ersten Industrieroboter (11) bestimmt wird, dass das erste Objekt (12) im Raum-Koordinatensystem durch Vorgabe einer Stellung des ersten Industrieroboters (11) abgeglichen verstellbar ist, wobei das Bestimmen der ersten Abgleichgrösse erfolgt durch die Schritte
□ Ausrichten des Sichtfelds (8) der 3D-Bildaufnahmeeinrichtung (1) mittels der Antriebseinheit (3) auf zumindest einen Teil der ersten Merkmale (13) des ersten Objekts (12), das in einer ersten Abgleichstellung des ersten Industrieroboters (11) gehaltenen wird,
□ Aufnehmen mindestens eines ersten dreidimensionalen Bilds,
□ Bestimmen der Lage des ersten Objekts (12) im Raum-Koordinatensystem in der ersten Abgleichstellung des ersten Industrieroboters (11) aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem ersten dreidimensionalen Bild und
· der Kenntnis der ersten Merkmale (13) auf dem ersten Objekt (12),
und
□ Bestimmen der ersten Abgleichgrösse durch Heranziehen
· der ersten Abgleichstellung des ersten Industrieroboters (11) und
· zumindest der bestimmten Lage des ersten Objekts (12) in der ersten Abgleichstellung des ersten Industrieroboters (11),
und
• das erste Objekt (12) hochpräzise in eine erste Endlage verstellt wird durch die sich bis zum Erreichen der ersten Endlage in einer vorgegebenen Toleranz wiederholenden Schritte
□ Aufnehmen mindestens eines weiteren ersten dreidimensionalen Bilds,
□ Bestimmen der aktuellen Lage des ersten Objekts (12) im Raum-Koordinatensystem aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem weiteren ersten dreidimensionalen Bild und
· der Kenntnis der ersten Merkmale (13) auf dem ersten Objekt (12),
□ Berechnen der Lagedifferenz zwischen der aktuellen Lage des ersten Objekts (12) und der ersten Endlage,
□ Berechnen einer neuen Sollstellung des ersten Industrieroboters (11) unter Berücksichtigung der ersten Abgleichgrösse aus
· der aktuellen Stellung des ersten Industrieroboters (11) und
· einer mit der Lagedifferenz verknüpften Grösse, und
□ Verstellen des ersten Industrieroboters (11) in die
neue Sollstellung,
insbesondere wobei die Position (P) der 3D-Bildaufnahmeeinrichtung (1) im Raum-Koordinatensystem durch Zielen auf ortsfeste Zielmarken (T) mittels der 3D-Bildaufnahmeeinrichtung (1) bestimmt wird.

2. Verfahren nach Anspruch 1, wobei
nach dem Greifen des ersten Objekts (12) der erste Industrieroboter (11) in die erste Abgleichstellung des ersten Industrieroboters (11) zum Bestimmen der ersten Abgleichgrösse verstellt wird.

3. Verfahren nach Anspruch 1 oder 2, wobei vor den sich bis zum Erreichen der ersten Endlage in einer vorgegebenen Toleranz wiederholenden Schritten
• der erste Industrieroboter (11) unter Berücksichtigung der ersten Abgleichgrösse von der ersten Abgleichstellung in eine Stellung verstellt wird, in welcher das erste Objekt (12) in einer ersten Annäherungslage nahe der ersten Endlage positioniert ist, und
• das Sichtfeld (8) der 3D-Bildaufnahmeeinrichtung (1) mittels der Antriebseinheit (3) auf zumindest einen Teil der ersten Merkmale (13) des ersten Objekts (12), das in der ersten Annäherungslage positioniert ist, ausgerichtet wird.

4. Verfahren nach einem der Ansprüche 1 bis 3, wobei vor dem hochpräzisen Verstellen des ersten Objekts (12) in die erste Endlage
• ein zweites Objekt (22) von einem zweiten Industrieroboter (21) oder manuell gegriffen und in eine Objekthalterung (24) in einer zweiten Endlage im Raum-Koordinatensystem platziert wird.

5. Verfahren nach Anspruch 4, wobei
• die Objekthalterung (24) derart zwangszentrierend ausgebildet ist, dass das zweite Objekt (22) hochpräzise in der vorgegebenen zweiten Endlage platziert wird.

6. Verfahren nach Anspruch 4, wobei
• das zweite Objekt (22) bekannte optisch erfassbare zweite Merkmale (23) aufweist,
und nach dem Platzieren des zweiten Objekts (22) in der Objekthalterung (24)
• die zweite Endlage des zweiten Objekts (22) im Raum-Koordinatensystem bestimmt wird durch die Schritte
□ Ausrichten des Sichtfelds (8) der 3D-Bildaufnahmeeinrichtung (1) mittels der Antriebseinheit (3) auf zumindest einen Teil der zweiten Merkmale (23) des zweiten Objekts (22),
□ Aufnehmen mindestens eines zweiten dreidimensionalen Bilds,
□ Bestimmen der zweiten Endlage des zweiten Objekts (22) im Raum-Koordinatensystem aus
· der Position (P) der 3D-Bildaufnahmeeinrichtung (1), · der durch die Winkelmesseinheit (4) erfassten Winkelausrichtung der 3D-Bildaufnahmeeinrichtung (1),
· dem zweiten dreidimensionalen Bild und
· der Kenntnis der zweiten Merkmale (23) auf dem zweiten Objekt (22).

7. Verfahren nach einem der Ansprüche 1 bis 3, wobei vor dem hochpräzisen Verstellen des ersten Objekts (12) in die erste Endlage
• ein zweites Objekt (22), das bekannte optisch erfassbare zweite Merkmale (23) aufweist, von einem zweiten Industrieroboter (21) innerhalb einer Greiftoleranz gegriffen wird und gehalten wird,
• der zweite Industrieroboter (21) in eine Endstellung des zweiten Industrieroboters (21) verstellt wird, in welcher sich das zweite Objekt (22) in einer zweiten Endlage befindet, und
• die zweite Endlage des zweiten Objekts (22) im Raum-Koordinatensystem bestimmt wird durch die Schritte
□ Ausrichten des Sichtfelds (8) der 3D-Bildaufnahmeeinrichtung (1) mittels der Antriebseinheit (3) auf zumindest einen Teil der zweiten Merkmale (23) des zweiten Objekts (22),
□ Aufnehmen mindestens eines zweiten dreidimensionalen Bilds, und
□ Bestimmen der zweiten Endlage des zweiten Objekts (22) im Raum-Koordinatensystem aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem zweiten dreidimensionalen Bild und
· der Kenntnis der zweiten Merkmale (23) auf dem zweiten Objekt (22).

8. Verfahren nach einem der Ansprüche 5 bis 7, wobei
• die erste Endlage für das erste Objekt (12) aus der zweiten Endlage des zweiten Objekts (22) und einer vorgegebenen Relativlage zwischen dem ersten Objekt (12) und dem zweiten Objekt (22) berechnet wird.

9. Verfahren nach einem der Ansprüche 1 bis 3, wobei vor dem hochpräzisen Verstellen des ersten Objekts (12) in die erste Endlage
• ein zweites Objekt (22), das bekannte optisch erfassbare zweite Merkmale (23) aufweist, von einem zweiten Industrieroboter (21) innerhalb einer Greiftoleranz gegriffen wird und gehalten wird,
• eine derartige, die Greiftoleranz korrigierende zweite Abgleichgrösse für den zweiten Industrieroboter (21) bestimmt wird, dass das zweite Objekt (22) im Raum-Koordinatensystem durch Vorgabe einer Stellung des zweiten Industrieroboters (21) abgeglichen verstellbar ist, wobei das Bestimmen der zweiten Abgleichgrösse erfolgt durch die Schritte
□ Ausrichten des Sichtfelds (8) der 3D-Bildaufnahmeeinrichtung (1) mittels der Antriebseinheit (3) auf zumindest einen Teil der zweiten Merkmale (23) des zweiten Objekts (22), das in einer zweiten Abgleichstellung des zweiten Industrieroboters (21) gehaltenen wird,
□ Aufnehmen mindestens eines zweiten dreidimensionalen Bilds,
□ Bestimmen der Lage des zweiten Objekts (22) im Raum-Koordinatensystem in der zweiten Abgleichstellung des zweiten Industrieroboters (21) aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem zweiten dreidimensionalen Bild und
· der Kenntnis der zweiten Merkmale (23) auf dem zweiten Objekt (22),
und
□ Bestimmen der zweiten Abgleichgrösse durch Heranziehen
· der zweiten Abgleichstellung des zweiten Industrieroboters (21) und
· zumindest der bestimmten Lage des zweiten Objekts (22) in der zweiten Abgleichstellung des zweiten Industrieroboters (21),
und
• das zweite Objekt (22) hochpräzise in eine zweite Endlage verstellt wird durch die sich bis zum Erreichen der zweiten Endlage in einer vorgegebenen Toleranz wiederholenden Schritte
□ Aufnehmen mindestens eines weiteren zweiten dreidimensionalen Bilds,
□ Bestimmen der aktuellen Lage des zweiten Objekts (22) im Raum-Koordinatensystem aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem weiteren zweiten dreidimensionalen Bild und
· der Kenntnis der zweiten Merkmale (23) auf dem zweiten Objekt (22),
□ Berechnen der Lagedifferenz zwischen der aktuellen Lage des zweiten Objekts (22) und der zweiten Endlage,
□ Berechnen einer neuen Sollstellung des zweiten Industrieroboters (21) unter Berücksichtigung der zweiten Abgleichgrösse aus
· der aktuellen Stellung des zweiten Industrieroboters (21) und
· einer mit der Lagedifferenz verknüpften Grösse, und
□ Verstellen des zweiten Industrieroboters (21) in die neue Sollstellung.

10. Verfahren nach Anspruch 9, wobei
nach dem Greifen des zweiten Objekts (22) der zweite Industrieroboter (21) in die zweite Abgleichstellung des zweiten Industrieroboters (21) zum Bestimmen der zweiten Abgleichgrösse verstellt wird.

11. Verfahren nach Anspruch 9 oder 10, wobei vor den sich bis zum Erreichen der zweiten Endlage in einer vorgegebenen Toleranz wiederholenden Schritten
• der zweite Industrieroboter (21) unter Berücksichtigung der zweiten Abgleichgrösse von der zweiten Abgleichstellung in eine Stellung verstellt wird, in welcher das zweite Objekt (22) in einer zweiten Annäherungslage nahe der zweiten Endlage positioniert ist, und
• das Sichtfeld (8) der 3D-Bildaufnahmeeinrichtung (1) mittels der Antriebseinheit (3) auf zumindest einen Teil der zweiten Merkmale (23) des zweiten Objekts (22), das in der zweiten Annäherungslage positioniert ist, ausgerichtet wird.

12. Verfahren nach einem der Ansprüche 1 bis 11, wobei
• ein als Bearbeitungswerkzeug ausgebildetes drittes Objekt (32) von einem dritten Industrieroboter (31) innerhalb einer Haltetoleranz gehalten wird,
• das Bearbeitungswerkzeug (32) oder ein hierzu gekoppeltes Teil des dritten Industrieroboters (31) bekannte optisch erfassbare dritte Merkmale (33) aufweist und
• eine derartige, die Haltetoleranz korrigierende dritte Abgleichgrösse für den dritten Industrieroboter (31) bestimmt wird, dass das Bearbeitungswerkzeug (32) im Raum-Koordinatensystem durch Vorgabe einer Stellung des dritten Industrieroboters (31) abgeglichen verstellbar ist, wobei das Bestimmen der dritten Abgleichgrösse erfolgt durch die Schritte
□ Ausrichten des Sichtfelds (8) der 3D-Bildaufnahmeeinrichtung (1) mittels der Antriebseinheit (3) auf zumindest einen Teil der dritten Merkmale (33), wobei das Bearbeitungswerkzeug (32) in einer dritten Abgleichstellung des dritten Industrieroboters (31) gehaltenen wird,
□ Aufnehmen mindestens eines dritten dreidimensionalen Bilds,
□ Bestimmen der Lage des Bearbeitungswerkzeugs (32) im Raum-Koordinatensystem in der dritten Abgleichstellung des dritten Industrieroboters (31) aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem dritten dreidimensionalen Bild und
· der Kenntnis der dritten Merkmale (33),
und
□ Bestimmen der dritten Abgleichgrösse durch Heranziehen
· der dritten Abgleichstellung des dritten Industrieroboters (31) und
· zumindest der bestimmten Lage des Bearbeitungswerkzeugs (32) in der dritten Abgleichstellung des dritten Industrieroboters (31).

13. Verfahren nach Anspruch 12, wobei
• das Bearbeitungswerkzeug (32) hochpräzise in eine dritte Endlage verstellt wird durch die sich bis zum Erreichen der dritten Endlage in einer vorgegebenen Toleranz wiederholenden Schritte
□ Aufnehmen mindestens eines weiteren dritten dreidimensionalen Bilds,
□ Bestimmen der aktuellen Lage des Bearbeitungswerkzeugs (32) im Raum-Koordinatensystem aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem weiteren dritten dreidimensionalen Bild und
· der Kenntnis der dritten Merkmale (33),
□ Berechnen der Lagedifferenz zwischen der aktuellen Lage des dritten Objekts (32) und der dritten Endlage,
□ Berechnen einer neuen Sollstellung des dritten Industrieroboters (31) unter Berücksichtigung der dritten Abgleichgrösse aus
· der aktuellen Stellung des dritten Industrieroboters (31) und
· einer mit der Lagedifferenz verknüpften Grösse, und
□ Verstellen des dritten Industrieroboters (31) in die neue Sollstellung.

14. Verfahren nach einem der Ansprüche 1 bis 13, wobei die mit der Lagedifferenz verknüpfte Grösse von der mit einem Faktor kleiner oder gleich 1 multiplizierten Lagedifferenz gebildet wird.

15. Verfahren nach einem der Ansprüche 1 bis 14, wobei
• die Merkmale (13; 23; 33) im Wesentlichen aus einem durch eine elektronische Datenverarbeitungseinrichtung verarbeitbaren Modell bekannt sind,
• mittels auf einer elektronischen Datenverarbeitungseinrichtung ausgeführten Bildverarbeitung die Merkmale (13; 23; 33)
□ in dem Modell und/oder
□ in den Bildaufnahmen
identifiziert und
□ die Merkmale (13; 23; 33) aus dem Modell sowie
□ die Merkmale (13; 23; 33) aus den Bildaufnahmen einander zugeordnet werden, und
• die Lage des Objekts (12; 22; 32) im Raum-Koordinatensystem aus
□ der erfassten Position der aufgenommenen Merkmale (13; 23; 33) im Raum-Koordinatensystem und
□ den zugeordneten Merkmalen (13; 23; 33) bestimmt wird.

16. Verfahren nach Anspruch 15,
• wobei die relative Lage der aufgenommenen Merkmale (13; 23; 33) zueinander ermittelt wird und mit der relativen Lage der aus dem Modell im Wesentlichen bekannten Merkmalen zueinander verglichen wird,
• insbesondere wobei bei Überschreiten einer Abweichung zwischen der relativen Lage der aufgenommenen Merkmale (13; 23; 33) und der relativen Lage der aus dem Modell im Wesentlichen bekannten Merkmalen eine Fehlermeldung ausgegeben wird,
• insbesondere wobei im Falle der Fehlermeldung das Objekt (12; 22; 32) gegen ein neues Objekt (12; 22; 32) ausgetauscht wird, und
• insbesondere wobei das Modell dem erfassten Objekt (12; 22; 32) angepasst wird und das angepasste Modell insbesondere die Endlage im Raum-Koordinatensystem bestimmt.

17. Verfahren nach einem der Ansprüche 1 bis 16, wobei die 3D-Bildaufnahmeeinrichtung (1) derart ausgebildet ist, dass
• mindestens eine erste Kamera (2ₐ) mittels der Antriebseinheit (3) um jeweils eine in Bezug auf das Raum-Koordinatensystem horizontale Kippachse (H) und eine vertikale Stehachse (V) ausrichtbar ist,
• durch die Winkelmesseinheit (4) jeweils die horizontale Winkelausrichtung (α) um die Stehachse (V) und die vertikale Winkelausrichtung (β) um die Kippachse (H) im Raum-Koordinatensystem erfasst werden und
• insbesondere sich die horizontale Kippachse (H) und die vertikale Stehachse (V) im Wesentlichen schneiden.

18. Verfahren nach Anspruch 17, wobei
• die erste Kamera (2ₐ) als RIM-Kamera zur direkten Aufnahme des dreidimensionalen Bildes, das sich aus einer Vielzahl an Bildpunkten mit jeweils zugeordneter Tiefeninformation zusammensetzt, ausgebildet ist.

19. Verfahren nach Anspruch 17, wobei
• die 3D-Bildaufnahmeeinrichtung (1) einen elektrooptischen Distanzmesser (5) aufweist und
• das dreidimensionale Bild durch
□ Erfassen der Tiefeninformationen durch mindestens eine optische Tiefenmessung auf mit den Bildpunkten korrespondierende Abschnitte des Objekts (12, 22, 32) mittels des elektrooptischen Distanzmessers (5) und
□ Zuordnen der Tiefeninformationen zu der Vielzahl an Bildpunkten
erzeugt wird,
wobei der elektrooptische Distanzmesser (5) insbesondere
• als Punktscanner ausgebildet ist und das Erfassen der Tiefeninformationen durch ein serielles Scannen mittels des Punktscanners erfolgt, wobei mindestens ein punktartiger Messstrahl eine mit dem Sichtfeld (8) korrespondierende Fläche des Objekts (12, 22, 32) punktweise optisch abtastet, oder
• als Linienscanner ausgebildet ist und das Erfassen der Tiefeninformationen durch ein paralleles Scannen mittels des Linienscanners erfolgt, wobei mindestens ein linienartiger Messstrahl eine mit dem Sichtfeld (8) korrespondierende Fläche des Objekts (12, 22, 32) linienweise optisch abtastet, oder
• als Flächentiefenmesser ausgebildet ist und das Erfassen der Tiefeninformationen durch ein vollparalleles Abtasten mittels des Flächentiefenmessers erfolgt, wobei mindestens ein flächiger Messstrahl, der insbesondere durch ein Bündel aus einer Vielzahl an Messstrahlen gebildet wird, eine mit dem Sichtfeld (8) korrespondierende Fläche des Objekts (12, 22, 32) flächenweise optisch abtastet.

20. Verfahren nach Anspruch 17, wobei
die 3D-Bildaufnahmeeinrichtung (1)
• eine zweite Kamera (2_{b}) aufweist, die mit der ersten Kamera (2ₐ) derart gekoppelt und die derart zur ersten Kamera (2ₐ) beanstandet angeordnet ist, dass die zumindest teilweise überschneidenden Sichtfelder der Kameras (2ₐ, 2_{b}) in ihrem Überlappungsbereich das Sichtfeld (8) der 3D-Bildaufnahmeeinrichtung (1) bilden und
• das dreidimensionale Bild im Sichtfeld (8) der 3D-Bildaufnahmeeinrichtung (1) aus der Kenntnis der relativen Perspektiven der Kameras (2ₐ, 2_{b}) zueinander mittels Bildverarbeitung erzeugt wird.

21. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einer optischen 3D-Bildaufnahmeeinrichtung (1),
□ die in einem dreidimensionalen Raum-Koordinatensystem kalibriert und in einer bekannten Position (P) mit einer bekannten Ausrichtung positioniert ist,
□ die zur elektronischen Aufnahme dreidimensionaler Bilder innerhalb eines bestimmten Sichtfelds (8) ausgebildet ist, wobei sich die dreidimensionalen Bilder jeweils aus einer Vielzahl an Bildpunkten, denen jeweils eine Tiefeninformation zugeordnet ist, zusammensetzen,
□ die eine Antriebseinheit (3) zum - ein Verstellen des Sichtfelds (8) bewirkenden - Ausrichten der 3D-Bildaufnahmeeinrichtung (1) aufweist und
□ die eine im Raum-Koordinatensystem kalibrierte Winkelmesseinheit (4) zum hochpräzisen Erfassen der Winkelausrichtung der 3D-Bildaufnahmeeinrichtung (1) besitzt, so dass das Sichtfeld (8) im Raum-Koordinatensystem bestimmbar ist,
und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11) und der optischen 3D-Bildaufnahmeeinrichtung (1) derart in Datenverbindung steht, dass
• der Steuervorrichtung (9) die von der optischen 3D-Bildaufnahmeeinrichtung (1) aufgenommenen dreidimensionalen Bilder zugeführt werden,
• der Steuervorrichtung (9) die von der Winkelmesseinheit (4) erfasste Winkelausrichtung der 3D-Bildaufnahmeeinrichtung (1) zugeführt wird,
• die Antriebseinheit (3) mittels der Steuervorrichtung (9) zum Ausrichten der 3D-Bildaufnahmeeinrichtung (1) angesteuert wird und
• der erste Industrieroboter (11) in Stellungen, die durch die Steuervorrichtung (9) vorgegeben werden, verstellt wird,
wobei die Steuervorrichtung (9) und deren Datenverarbeitungseinrichtung derart ausgebildet sind, dass
• ein erstes Objekt (12), das der Steuervorrichtung (9) bekannte optisch erfassbare erste Merkmale aufweist (13), von dem ersten Industrieroboter (11) innerhalb einer Greiftoleranz gegriffen wird und gehalten wird,
• eine derartige, die Greiftoleranz korrigierende erste Abgleichgrösse für den ersten Industrieroboter (11) durch die Steuervorrichtung (9) bestimmt wird, dass das erste Objekt (12) im Raum-Koordinatensystem durch Vorgabe einer Stellung des ersten Industrieroboters (11) abgeglichen verstellbar ist, wobei das Bestimmen der ersten Abgleichgrösse mittels der Steuervorrichtung (9) erfolgt durch die Schritte
□ Ausrichten des Sichtfelds (8) der 3D-Bildaufnahmeeinrichtung (1) mittels der Antriebseinheit (3) auf zumindest einen Teil der ersten Merkmale (13) des ersten Objekts (12), das in einer ersten Abgleichstellung des ersten Industrieroboters (11) gehaltenen wird,
□ Aufnehmen mindestens eines ersten dreidimensionalen Bilds,
□ Bestimmen der Lage des ersten Objekts (12) im Raum-Koordinatensystem in der ersten Abgleichstellung des ersten Industrieroboters (11) aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem ersten dreidimensionalen Bild und
· der Kenntnis der ersten Merkmale (13) auf dem ersten Objekt (12),
und
□ Bestimmen der ersten Abgleichgrösse durch Heranziehen
· der ersten Abgleichstellung des ersten Industrieroboters (11) und
· zumindest der bestimmten Lage des ersten Objekts (12) in der ersten Abgleichstellung des ersten Industrieroboters (11)
und
• das erste Objekt (12) durch die Steuervorrichtung (9) hochpräzise in eine erste Endlage verstellt wird durch die sich bis zum Erreichen der ersten Endlage in einer vorgegebenen Toleranz wiederholenden Schritte
□ Aufnehmen mindestens eines weiteren ersten dreidimensionalen Bilds,
□ Bestimmen der aktuellen Lage des ersten Objekts (12) im Raum-Koordinatensystem aus
· der Position (P) der 3D-Bildaufnahmeeinrichtung (1),
· der durch die Winkelmesseinheit (4) erfassten Winkelausrichtung der 3D-Bildaufnahmeeinrichtung (1),
· dem weiteren ersten dreidimensionalen Bild und
· der Kenntnis der ersten Merkmale (13) auf dem ersten Objekt (12),
□ Berechnen der Lagedifferenz zwischen der aktuellen Lage des ersten Objekts (12) und der ersten Endlage,
□ Berechnen einer neuen Sollstellung des ersten Industrieroboters (11) unter Berücksichtigung der ersten Abgleichgrösse aus
· der aktuellen Stellung des ersten Industrieroboters (11) und
· einer mit der Lagedifferenz verknüpften Grösse, und
□ Verstellen des ersten Industrieroboters (11) in die neue Sollstellung.

22. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einer optischen 3D-Bildaufnahmeeinrichtung (1),
□ die in einem dreidimensionalen Raum-Koordinatensystem kalibriert und in einer bekannten Position (P) mit einer bekannten Ausrichtung positioniert ist,
□ die zur elektronischen Aufnahme dreidimensionaler Bilder innerhalb eines bestimmten Sichtfelds (8) ausgebildet ist, wobei sich die dreidimensionalen Bilder jeweils aus einer Vielzahl an Bildpunkten, denen jeweils eine Tiefeninformation zugeordnet ist, zusammensetzen,
□ die eine Antriebseinheit (3) zum - ein Verstellen des Sichtfelds (8) bewirkenden - Ausrichten der 3D-Bildaufnahmeeinrichtung (1) aufweist und
□ die eine im Raum-Koordinatensystem kalibrierte Winkelmesseinheit (4) zum hochpräzisen Erfassen der Winkelausrichtung der 3D-Bildaufnahmeeinrichtung (1) besitzt, so dass das Sichtfeld (8) im Raum-Koordinatensystem bestimmbar ist,
und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11) und der optischen 3D-Bildaufnahmeeinrichtung (1) derart in Datenverbindung steht, dass
• der Steuervorrichtung (9) die von der optischen 3D-Bildaufnahmeeinrichtung (1) aufgenommenen dreidimensionalen Bilder zugeführt werden,
• der Steuervorrichtung (9) die von der Winkelmesseinheit (4) erfasste Winkelausrichtung der 3D-Bildaufnahmeeinrichtung (1) zugeführt wird,
• die Antriebseinheit (3) mittels der Steuervorrichtung (9) zum Ausrichten der 3D-Bildaufnahmeeinrichtung (1) angesteuert wird und
• der erste Industrieroboter (11) in Stellungen, die durch die Steuervorrichtung (9) vorgegeben werden, verstellt wird,
wobei die Steuervorrichtung (9) und deren Datenverarbeitungseinrichtung zum Ausführen des Verfahrens nach einem der Ansprüche 1, 2, 3 und 14 bis 20 ausgebildet ist.

23. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einem in vorgebbare Stellungen verstellbaren zweiten Industrieroboter (21),
• einer optischen 3D-Bildaufnahmeeinrichtung (1),
□ die in einem dreidimensionalen Raum-Koordinatensystem kalibriert und in einer bekannten Position (P) mit einer bekannten Ausrichtung positioniert ist,
□ die zur elektronischen Aufnahme dreidimensionaler Bilder innerhalb eines bestimmten Sichtfelds (8) ausgebildet ist, wobei sich die dreidimensionalen Bilder jeweils aus einer Vielzahl an Bildpunkten, denen jeweils eine Tiefeninformation zugeordnet ist, zusammensetzen,
□ die eine Antriebseinheit (3) zum - ein Verstellen des Sichtfelds (8) bewirkenden - Ausrichten der 3D-Bildaufnahmeeinrichtung (1) aufweist und
□ die eine im Raum-Koordinatensystem kalibrierte Winkelmesseinheit (4) zum hochpräzisen Erfassen der Winkelausrichtung der 3D-Bildaufnahmeeinrichtung (1) besitzt, so dass das Sichtfeld (8) im Raum-Koordinatensystem bestimmbar ist,
und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11), dem zweiten Industrieroboter (21) und der optischen 3D-Bildaufnahmeeinrichtung (1) derart in Datenverbindung steht, dass
• der Steuervorrichtung (9) die von der optischen 3D-Bildaufnahmeeinrichtung (1) aufgenommenen dreidimensionalen Bilder zugeführt werden,
• der Steuervorrichtung (9) die von der Winkelmesseinheit (4) erfasste Winkelausrichtung der 3D-Bildaufnahmeeinrichtung (1) zugeführt wird,
• die Antriebseinheit (3) mittels der Steuervorrichtung (9) zum Ausrichten der 3D-Bildaufnahmeeinrichtung (1) angesteuert wird und
• der erste Industrieroboter (11) und der zweite Industrieroboter in Stellungen, die durch die Steuervorrichtung (9) vorgegeben werden, verstellt werden, und
wobei die Steuervorrichtung (9) und deren Datenverarbeitungseinrichtung zum Ausführen des Verfahrens nach einem der Ansprüche 4 bis 11 ausgebildet ist.

24. System zum hochpräzisen Positionieren mindestens eines Objekts in eine Endlage im Raum mittels eines Industrieroboters, mit
• einem in vorgebbare Stellungen verstellbaren ersten Industrieroboter (11),
• einem in vorgebbare Stellungen verstellbaren zweiten Industrieroboter (21),
• einem in vorgebbare Stellungen verstellbaren dritten Industrieroboter (31), der ein als Bearbeitungswerkzeug ausgebildetes drittes Objekt (32) innerhalb einer Haltetoleranz hält, wobei das Bearbeitungswerkzeug (32) oder ein hierzu gekoppeltes Teil des dritten Industrieroboters (31) bekannte optisch erfassbare dritte Merkmale (33) aufweist,
• einer optischen 3D-Bildaufnahmeeinrichtung (1),
□ die in einem dreidimensionalen Raum-Koordinatensystem kalibriert und in einer bekannten Position (P) mit einer bekannten Ausrichtung positioniert ist,
□ die zur elektronischen Aufnahme dreidimensionaler Bilder innerhalb eines bestimmten Sichtfelds (8) ausgebildet ist, wobei sich die dreidimensionalen Bilder jeweils aus einer Vielzahl an Bildpunkten, denen jeweils eine Tiefeninformation zugeordnet ist, zusammensetzen,
□ die eine Antriebseinheit (3) zum - ein Verstellen des Sichtfelds (8) bewirkenden - Ausrichten der 3D-Bildaufnahmeeinrichtung (1) aufweist und
□ die eine im Raum-Koordinatensystem kalibrierte Winkelmesseinheit (4) zum hochpräzisen Erfassen der Winkelausrichtung der 3D-Bildaufnahmeeinrichtung (1) besitzt, so dass das Sichtfeld (8) im Raum-Koordinatensystem bestimmbar ist,
und
• einer Steuervorrichtung (9), die eine zur Bildverarbeitung ausgebildete Datenverarbeitungseinrichtung aufweist,
wobei die Steuervorrichtung (9) mit dem ersten Industrieroboter (11), dem zweiten Industrieroboter (21), dem dritten Industrieroboter (31) und der optischen 3D-Bildaufnahmeeinrichtung (1) derart in Datenverbindung steht, dass
• der Steuervorrichtung (9) die von der optischen 3D-Bildaufnahmeeinrichtung (1) aufgenommenen dreidimensionalen Bilder zugeführt werden,
• der Steuervorrichtung (9) die von der Winkelmesseinheit (4) erfasste Winkelausrichtung der 3D-Bildaufnahmeeinrichtung (1) zugeführt wird,
• die Antriebseinheit (3) mittels der Steuervorrichtung (9) zum Ausrichten der 3D-Bildaufnahmeeinrichtung (1) angesteuert wird und
• der erste Industrieroboter (11), der zweite Industrieroboter (21) und der dritte Industrieroboter (31) in Stellungen, die durch die Steuervorrichtung (9) vorgegeben werden, verstellt werden, und
wobei die Steuervorrichtung (9) zum Ausführen des Verfahrens nach einem der Ansprüche 12 oder 13 ausgebildet ist.

25. System nach einem der Ansprüche 21 bis 24, wobei die optischen 3D-Bildaufnahmeeinrichtung (1) derart ausgebildet ist, dass
• mindestens eine erste Kamera (2ₐ) mittels der Antriebseinheit (3) um jeweils eine in Bezug auf das Raum-Koordinatensystem horizontale Kippachse (H) und eine vertikale Stehachse (V) ausrichtbar ist,
• durch die Winkelmesseinheit (4) jeweils die horizontale Winkelausrichtung (α) um die Stehachse (V) und die vertikale Winkelausrichtung (β) um die Kippachse (H) im Raum-Koordinatensystem erfasst werden und
• insbesondere sich die horizontale Kippachse (H) und die vertikale Stehachse (V) im Wesentlichen schneiden.

26. System nach Anspruch 25, wobei
• die erste Kamera (2ₐ) als RIM-Kamera zur direkten Aufnahme des dreidimensionalen Bildes, das sich aus einer Vielzahl an Bildpunkten mit jeweils zugeordneter Tiefeninformation zusammensetzt, ausgebildet ist.

27. System nach Anspruch 25, wobei
• die 3D-Bildaufnahmeeinrichtung (1) einen elektrooptischen Distanzmesser (5) aufweist und
• die Steuervorrichtung (9) und deren Datenverarbeitungseinrichtung und/oder die 3D-Bildaufnahmeeinrichtung derart ausgebildet sind, dass das dreidimensionale Bild durch
□ Erfassen der Tiefeninformationen durch mindestens eine optische Tiefenmessung auf mit den Bildpunkten korrespondierende Abschnitte des Objekts (12, 22, 32) mittels des elektrooptischen Distanzmessers (5) und
□ Zuordnen der Tiefeninformationen zu der Vielzahl an Bildpunkten
erzeugt wird,
wobei der elektrooptische Distanzmesser (5) insbesondere
• als Punktscanner ausgebildet ist und das Erfassen der Tiefeninformationen durch ein serielles Scannen mittels des Punktscanners erfolgt, wobei mindestens ein punktartiger Messstrahl eine mit dem Sichtfeld (8) korrespondierende Fläche des Objekts (12, 22, 32) punktweise optisch abtastet, oder
• als Linienscanner ausgebildet ist und das Erfassen der Tiefeninformationen durch ein paralleles Scannen mittels des Linienscanners erfolgt, wobei mindestens ein linienartiger Messstrahl eine mit dem Sichtfeld (8) korrespondierende Fläche des Objekts (12, 22, 32) linienweise optisch abtastet, oder
• als Flächentiefenmesser ausgebildet ist und das Erfassen der Tiefeninformationen durch ein vollparalleles Abtasten mittels des Flächentiefenmessers erfolgt, wobei mindestens ein flächiger Messstrahl, der insbesondere durch ein Bündel aus einer Vielzahl an Messstrahlen gebildet wird, eine mit dem Sichtfeld (8) korrespondierende Fläche des Objekts (12, 22, 32) flächenweise optisch abtastet.
